(19) Europäisches Patentamt / European Patent Office / Office européen des brevets

(11) **EP 2 457 110 B1**

(12) **EUROPÄISCHE PATENTSCHRIFT**

(45) Veröffentlichungstag und Bekanntmachung des Hinweises auf die Patenterteilung:
**27.02.2019   Patentblatt 2019/09**

(21) Anmeldenummer: **10730490.9**

(22) Anmeldetag: **14.07.2010**

(51) Int Cl.:
*G01S 7/539* (2006.01)          *G01S 15/93* (2006.01)
*G01S 15/58* (2006.01)          *G01S 7/527* (2006.01)
*G01S 15/52* (2006.01)

(86) Internationale Anmeldenummer:
**PCT/EP2010/060114**

(87) Internationale Veröffentlichungsnummer:
**WO 2011/009786 (27.01.2011 Gazette 2011/04)**

(54) **ULTRASCHALL- MESSVORRICHTUNG UND VERFAHREN ZUM AUSWERTEN EINES ULTRASCHALLSIGNALS**

ULTRASONIC MEASUREMENT APPARATUS AND METHOD FOR EVALUATING AN ULTRASONIC SIGNAL

DISPOSITIF DE MESURE PAR ULTRASONS ET PROCÉDÉ D'ÉVALUATION D'UN SIGNAL ULTRASONORE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **20.07.2009   DE 102009027842**

(43) Veröffentlichungstag der Anmeldung:
**30.05.2012   Patentblatt 2012/22**

(73) Patentinhaber: **Robert Bosch GmbH**
**70442 Stuttgart (DE)**

(72) Erfinder: **KARL, Matthias**
**76275 Ettlingen (DE)**

(56) Entgegenhaltungen:
**EP-A2- 0 898 176        DE-C1- 19 634 093**
**DE-C1- 19 716 680**

EP 2 457 110 B1

**Beschreibung**

Die Erfindung betrifft eine Ultraschall-Messvorrichtung. Des Weiteren betrifft die Erfindung ein Verfahren zum Auswerten eines Ultraschallsignals.

Stand der Technik

Ein Fahrzeug weist häufig ein Ultraschallsystem zum Ermitteln einer Position eines Objekts in einer Umgebung des Fahrzeugs auf. Ein solches Ultraschallsystem ist aus der DE 38 130 83 A1 bekannt. Ein derartiges Ultraschallsystem weist mindestens eine Sende- und eine Empfangseinrichtung auf, welche an dem Fahrzeug angebracht ist. Insbesondere kann das Ultraschallsystem auch mehrere Sende- und Empfangseinrichtungen umfassen, welche verteilt an dem Fahrzeug angeordnet sind. Die Sende- und Empfangseinrichtungen werden in der Regel in einem Gerät verbaut und nutzen ein und denselben Elektro-Akustik-Wandler, die Membran, als bidirektional angesteuerte Antenneneinrichtung. In diesem Fall ist die Antenneneinrichtung sowohl als Sender als auch als Empfänger für ein Ultraschallsignal nutzbar. Häufig erfolgt das Ansteuern eines Ultraschallsystems mit mehreren Antenneneinrichtungen so, dass nur wenige Antenneneinrichtungen zu einem Zeitpunkt ein Ultraschallsignal als Sendesignal aussenden. Um Detektionsvieldeutigkeiten zu vermeiden, wird nach Aussenden eines meist pulsförmigen Sendesignals eine als Echozyklus bezeichnete Zeitspanne bis zum Aussenden eines nächsten Sendepulses abgewartet. Die Zeitspanne, welche notwendig ist, bis alle Antenneneinrichtungen des Ultraschallsystems zumindest einmal ein Sendesignal gesendet haben, wird häufig als Sendezyklus des Ultraschallsystems bezeichnet.

Ein von einer Antenneneinrichtung ausgesendetes Sendesignal kann auf mindestens einen reflektierenden Objektpunkt treffen und an diesem zumindest teilweise reflektiert werden. Anschließend empfängt eine Antenneneinrichtung des Empfängers das reflektierte Ultraschallsignal und ermittelt die Zeitdauer zwischen dem Aussenden des Sendesignals und dem Empfangen des reflektierten Ultraschallsignals. Eine Auswerteeinrichtung des Ultraschallsystems kann anschließend anhand der mindestens einen ermittelten Zeitdauer eine Position des mindestens einen reflektierenden Objektpunkts in einer Umgebung des Fahrzeugs bestimmen. Zudem ist aus EP 0 898 176 eine Sonaranlage für Wasserfahrzeuge bekannt, bei der zum Bestimmen von Entfernung und Geschwindigkeit Mustersignale verwendet werden, die aus dem Sendeimpuls durch Frequenz- und Zeitverschiebung abgeleitet werden.

Offenbarung der Erfindung

Die Erfindung schafft eine Ultraschall-Messvorrichtung mit den Merkmalen des Anspruchs 1 und ein Verfahren zum Auswerten eines Ultraschallsignals mit den Merkmalen des Anspruchs 8.

Vorteilhafte Weiterbildungen der Erfindung sind in den Unteransprüchen beschrieben. Die über die Merkmale der Ausführungsformen der Ultraschall-Messvorrichtung realisierten Vorteile sind auch bei einem entsprechenden Verfahren gewährleistet.

Die Erfindung beruht unter anderem darauf, dass eine Messfolge von Periodendauern eines empfangenen Ultraschallsignals ähnlich einem Fingerabdruck jeweils ein Charakteristitikum sowohl für den ausgesandten Sendeimpuls als auch für den Übertragungsweg zu der Empfangseinrichtung ist, wobei der Übertragungsweg beispielsweise durch die Richtcharakteristik der aussendenden und/oder empfangenen Antennen als auch durch die Objekte, an denen die ausgesandten Impulse auf ihrem Weg zu der Empfangseinrichtung reflektiert werden und durch deren Relativbewegung zueinander, bestimmt ist. Kennt die Auswerteeinrichtung den für ein Übertragungsszenarium charakteristischen Fingerabdruck, der vorzugsweise durch eine Folge von Referenzperiodendauern repräsentiert wird, so kann empfängerseitig detektiert werden, welches Szenario bei einem empfangenen Ultraschallsignal vorlag. Ultraschallsignale sind mittelwertfreie Wechselsignale und lassen sich somit als Periodendauerfolge mit zeitvarianter Signalstärke beschreiben. Unter einer Periodendauer kann der Zeitabschnitt eines Ultraschallsignals zwischen zwei aufeinander folgenden Nulldurchgängen, der häufig auch als Periodenhalbdauer bezeichnet wird, oder die Zeitdauer zwischen zwei benachbarten Wechseln von dem negativ/positiven zu dem positiven/negativen Signalzustand, auch als positive/negative Periodendauer bekannt, verstanden werden. Anstelle der Periodendauer kann aber auch eine äquivalente Größe bestimmt und ausgewertet werden. Es wird hier ausdrücklich darauf hingewiesen, dass die ermittelte Messfolge eine positive Periodendauerfolge, eine negative Periodendauerfolge, eine Folge positiver Periodendauer-Abweichungen von einer positiven Bezugsperiodendauerfolge, eine Folge negativer Periodendauer-Abweichungen von einer negativen Bezugsperiodendauerfolge, eine zeitveränderliche Frequenz und/oder eine zeitveränderliche Frequenz-Abweichung von einer Bezugsfrequenz umfassen kann. Als Alternative oder als Ergänzung dazu kann die Information auch eine Periodendauer- oder Frequenzgröße bezüglich einer Abweichung der mindestens einen Periodendauer des Empfangssignals umfassen. Beispielsweise ist die Information eine positive und/oder negative Periodendauerdifferenz und/oder eine Frequenzdifferenz zwischen dem Empfangssignal und dem Sendesignal.

Das Verfahren kann beispielsweise ein Verfahren zur Gewinnung empfangssignalinhärenter Merkmale einer Messvorrichtung umfassen.

Mittels der vorliegenden Erfindung ist es möglich, eine Periodendauerfolge und/oder eine zeitveränderliche Frequenzänderung mit geringem Zeit- und Arbeitsaufwand zu bestimmen. Die Periodendauer und/oder Frequenzänderung kann anschließend zum Ermitteln mindestens eines Form- und/oder Geschwindigkeitsmerkmals des reflektierenden Objekts herangezogen werden. Mittels des mindestens einen erkannten Form- und/oder Geschwindigkeitsmerkmals kann eine verbesserte Umgebungserfassung ausgeführt werden. Beispielsweise kann durch die bestimmte Relativgeschwindigkeit eine Stärkeänderung des Empfangssignals mit größerer Wahrscheinlichkeit einem Objekt zugeordnet werden. Ebenso ist durch eine Bestimmung der räumlichen Gestalt des Objekts der Objekttyp besser erkennbar. Auf gleiche Weise kann durch Verwendung unterschiedlicher Sendesignale eine Information zwischen einer sendenden und einer empfangenden Ultraschalleinrichtung übertragen werden.

Die vorliegende Erfindung bietet somit eine Intrapulsanalyse zum Bestimmen einer Relativbewegung, zum Ausführen einer Objektklassifizierung des reflektierenden Objekts und/oder zur Unterscheidung zwischen verschiedenen ausgesandten Signalformen.

Zusätzlich kann mittels der vorliegenden Erfindung eine wahrscheinliche Empfangszeit eines Echos präziser vorhergesagt werden. Die auf diese Weise gewonnene höhere Messgenauigkeit kann zum Verkürzen der Reaktionszeit und/oder zum Erhöhen der Messreichweite genutzt werden. Des Weiteren können die innerhalb des Sendezyklusses eines Ultraschallsystems zu unterschiedlichen Zeiten gewonnenen Objektinformationen, wie z.B. die Objektabstände, auf einen Bezugszeitpunkt normiert werden, wodurch eine präzisere Analyse der Objektszene um eine Fahrzeug durchführbar ist. Darüber hinaus kann die Messgenauigkeit und die Reaktionszeit zusätzlich verbessert werden, wenn von der Empfangseinrichtung unterscheidbare Sendesignale ausgesendet werden. Mittels der vorliegenden Erfindung ist die Empfangseinrichtung in der Lage, anhand des Zeitverlaufs eines Empfangssignals zu erkennen, welche Signalform aus einem Satz möglicher Signalformen ein ausgesendetes Sendesignal hat. Dabei wird bei dieser Ausführungsform der vorliegenden Erfindung die Ähnlichkeit des Empfangssignals mit dem Sendepuls nicht (nur), wie beim Stand der Technik, anhand der Signalstärke geprüft. Stattdessen ermöglicht die Ausführungsform ein Feststellen einer Ähnlichkeit eines Zeitverlaufs einer Frequenz und/oder einer Periodendauer des Empfangssignals mit dem Sendepuls. Dies gewährleistet weitere Systemverbesserungen, wie z.B. ein Senden mit geringerer Pulswiederholdauer und/oder eine Pulsseparation. Des Weiteren ist auf diese Weise eine Verbesserung einer Informationsübertragung zwischen einer sendenden Ultraschalleinrichtung und einer empfangenden Ultraschalleinrichtung bei einer Fahrzeug-Fahrzeug-Kommunikation leicht realisierbar.

Nachteilig an den bisher üblichen, rein an Amplitudenauswertung orientierten Verfahren zum Betreiben eines Ultraschallsystems ist, dass eine Relativbewegung eines Objekts gegenüber dem Ultraschallsystem nicht anhand eines einzelnen Echos erkennbar ist.

Bei bisherigen Messverfahren ist die Relativgeschwindigkeit des Objekts erst anhand einer Auswertung der Laufzeitunterschiede mehrerer Echos eines Objekts in aufeinander folgenden Sendezyklen möglich. Eine bedeutende Quelle für Messfehler ist dabei die Relativbewegung während eines Zeitintervalls zwischen zwei aufeinanderfolgenden Sendepulsen. Infolge der Relativbewegung können sich die Reflektionspunkte am Objekt räumlich so verändern, dass allein durch die Verschiebung der Reflektionspunkte bedingte Laufzeitunterschiede auftreten, die nicht die Folge einer Relativbewegung sind. Dies führt häufig auch zu Fehlern beim Zuordnen eines Empfangssignals an ein bestimmtes Objekt.

Ein unverhältnismäßig hoher Aufwand wäre nötig, wollte man eine Zuordnung der Empfangspulse an einzelne Objekte und/oder Sendesignalformen dadurch lösen, dass je möglicher Empfangspulsform eine Kreuzkorrelation von entsprechenden Analogwerten mit dem Empfangssignal berechnet wird. Der Rechenaufwand einer Kreuzkorrelation ist hoch und vervielfältigt sich durch die Zahl möglicher Echosignale.

Es ist deshalb wünschenswert, zur Überwindung der herkömmlichen Einschränkungen ein Verfahren zu entwickeln, mit dem die Tendenz der zeitlichen Entwicklung der Reflektionszeitpunkte ohne ein zusätzliches Messen vorhersagbar ist. Insbesondere ist es wünschenswert, über eine Möglichkeit zu verfügen, um die Relativgeschwindigkeit der Reflexionspunkte gegenüber der Geschwindigkeit der beispielsweise an einem Fahrzeug fest angeordneten Ultraschall-Antennenvorrichtung zu detektierten. Über die vorliegende Erfindung ist dies möglich.

Insbesondere ermöglicht die vorliegende Erfindung eine gleichzeitige/zeitparallele Auswertung von positiven und negativen Periodendauern. Auf diese Weise erhält man redundante Auswerteergebnisse, die zur gegenseitigen Plausibilisierung verwendbar sind. Die Plausibilisierung ist durchführbar, indem davon ausgegangen wird, dass bei einem nahezu fehlerfrei ausgeführten Messen und Auswerten der positiven und negativen Periodendauern die aus den negativen Periodendauern gewonnenen Auswerteergebnisse den aus den positiven Periodendauern gewonnenen Auswerteergebnissen entsprechen. Dabei können die aus der Intrapulsauswertung gewonnenen Auswerteergebnisse, beispielsweise durch eine Mittelwertbildung, verfeinert werden.

Über die vorliegende Erfindung können auch Reflektionen an eng nebeneinander befindlichen Reflexpunkten besser separiert werden.

Die hohen Zeitgenauigkeitsanforderungen der Ultraschallmessung, z.B. einer Messauflösung von 0,16 % je Relativgeschwindigkeitsänderung von 1 km/h, lassen sich bei dem erfindungsgemäßen Verfahren besonders durch Messungen über mehr als eine Periodendauer mit relativ geringen Anforderungen an die Messzeitbasis realisieren.

Die erfindungsgemäße Ultraschall-Messvorrichtung und das korrespondierende Verfahren können beispielsweise für ein Sicherheitssystem, ein Fahrerassistenzsystem und/oder für ein Informationsausgabe- und/oder Warngerät genutzt werden. Beispiele für ein geeignetes Fahrerassistenzsystem sind ein automatisches Brems-, Lenk- und/oder Beschleunigungssystem. Ein für die Erfindung bevorzugtes Sicherheitssystem ist beispielsweise ein Airbagsystem, eine anstellbare Motorhaube, ein Gurtstraffer, ein Fensterheber und/oder eine aktive Kopfstütze.

Die vorliegende Erfindung bietet somit eine Ultraschall-Detektion eines Fahrzeugumfelds mit einer Signalformerkennung, einer Objektdetektion und/oder einer Relativbewegungsschätzung. Zusätzlich zu der Auswertung der Messfolge kann gleichzeitig eine Auswertung des Zeitverlaufs der Momentansignalstärke erfolgen. Somit lassen sich herkömmliche Auswerteverfahren in die vorliegende Erfindung integrieren.

Der eventuell verwendete Schwellwertschalter der Ultraschall-Messvorrichtung kann einen bezüglich der Echolaufzeit variant einstellbaren Schwellwert ausgeben. Als Ergänzung zu der Bestimmung der Messfolge können auch mehrere Messeinrichtungen zeitparallel bzw. quasizeitparallel zur Festlegung mehrerer Messfolgen arbeiten.

Als mögliche Signalformen des empfangenen Ultraschallsignals sind Trägerfrequenzen, Einzelpulse, Doppelpulse, Direct-Sequence-Pulse, eine Chirp-Modulation und/oder eine Frequency-Hopping-Modulation über die vorliegende Erfindung bestimmbar.

Kurze Beschreibung der Zeichnungen

Weitere Merkmale und Vorteile der vorliegenden Erfindung werden nachfolgend anhand der Figuren erläutert. Es zeigen:

Fig. 1A bis C　　Koordinatensysteme zum Erläutern der für eine Intrapulsanalyse ausgewerteten Daten, wobei in Fig. 1A ein Sendesignal, in Fig. 1B positive Periodendauern und in Fig. 1B negative Periodendauern dargestellt sind;

Fig. 2A bis C　　ein Beispiel für eine Anwendungsmöglichkeit der Ultraschall-Messvorrichtung, wobei in Fig. 2A eine Verkehrssituation, in Fig. 2B eine zeitliche Intensitätsverteilung eines empfangenen Ultraschallsignals und in Fig. 2C die aus dem Ultraschallsignal ermittelbaren Relativgeschwindigkeiten der anderen Verkehrsteilnehmer dargestellt sind;

Fig. 3　　ein Blockdiagramm zum Darstellen einer Schaltungsvorrichtung einer ersten Ausführungsform der Ultraschall-Messvorrichtung;

Fig. 4　　ein Blockdiagramm zum Darstellen einer Schaltungsvorrichtung einer zweiten Ausführungsform der Ultraschall-Messvorrichtung;

Fig. 5　　ein Blockdiagramm zum Darstellen einer Schaltungsvorrichtung einer dritten Ausführungsform der Ultraschall-Messvorrichtung;

Fig. 6A und B　　ein Blockschaltbild und ein Koordinatensystem zum Darstellen einer Schaltungsvorrichtung einer vierten Ausführungsform der Ultraschall-Messvorrichtung, wobei Fig. 7A die Schaltungsvorrichtung und Fig. 7B einen von der Schaltungsvorrichtung ausgeführten Rechenschritt darstellen;

Fig. 7A bis C　　ein Blockdiagramm und zwei Koordinatensysteme zum Darstellen einer Schaltungsvorrichtung einer fünften Ausführungsform der Ultraschall-Messvorrichtung;

Fig. 8A und B　　zwei Koordinatensysteme zum Darstellen eines ersten Anwendungsbeispiels einer Ausführungsform der Ultraschall-Messvorrichtung, wobei Fig. 8A eine Auswertung einer Periodendauer und Fig. 8B eine Auswertung einer Frequenz darstellen;

Fig. 9A und B　　zwei Koordinatensysteme zum Darstellen eines zweiten Anwendungsbeispiels einer Ausführungsform der Ultraschall-Messvorrichtung, wobei Fig. 9A eine Auswertung einer Periodendauer und Fig. 9B eine Auswertung einer Frequenz darstellen;

Fig. 10A und B　　zwei Koordinatensysteme zum Darstellen eines dritten Anwendungsbeispiels einer Ausführungsform der Ultraschall-Messvorrichtung, wobei Fig. 10A eine Auswertung einer Periodendauer und Fig. 10B eine Auswertung einer Frequenz darstellen; und

Fig. 11　　ein Koordinatensysteme zum Darstellen einer Auswertung einer Periodendauer bei einem vierten Anwendungsbeispiel einer Ausführungsform der Ultraschall-Messvorrichtung.

Ausführungsformen der Erfindung

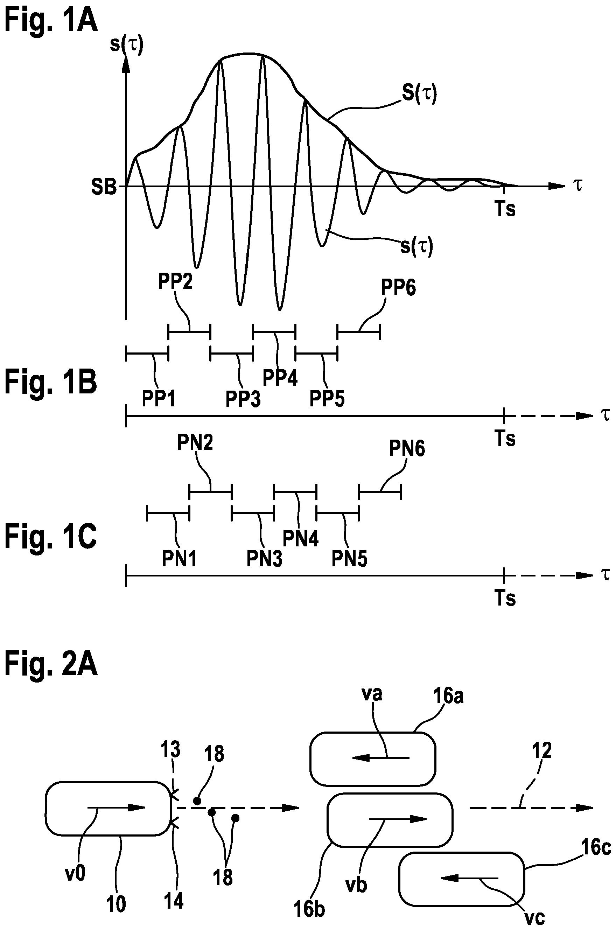

Fig. 1A bis C zeigen Koordinatensysteme zum Erläutern der für eine Intrapulsanalyse ausgewerteten Daten, wobei in Fig. 1A ein Sendesignal, in Fig. 1B positive Periodendauern und in Fig. 1B negative Periodendauern dargestellt sind.

Die Abszissen der Koordinatensysteme der Fig. 1A bis C sind eine Zeitachse T. Die Ordinate des Koordinatensystems der Fig. 1A gibt ein von einer Sendeeinrichtung einer Ultraschall-Messvorrichtung ausgesendetes Sendesignal s(T) wieder. Demgegenüber weisen die Koordinatensysteme der Fig. 1B und C keine Ordinate auf.

Das Sendesignal s(T) ist ein Ultraschallsignal, beispielsweise ein mittelwertfreies Bandpasssignal. Die Frequenzen des Sendesignals s(T) liegen in der Regel innerhalb eines Frequenzbandes von wenigen kHz. Das Aussenden des Sendesignals s(T) erfolgt in einem Zeitintervall zwischen den 0 und Ts. Die Pulsbreite des Sendesignals s(T) beträgt somit den Wert Ts. Die Einhüllende S(T) des Sendesignals s(T) ist ebenfalls in das Koordinatensystem der Fig. 1A eingetragen.

Der Frequenzverlauf des Sendesignals s(T) kann als Folge von positiven Periodendauern PP1 - PP6 und/oder als Folge von negativen Periodendauern PN1 - PN6 dargestellt werden. Die in Fig. 1B wiedergegebenen positiven Periodendauern PP1 bis PP6 und die in Fig. 1C dargestellten negativen Periodendauern PN1 bis PN6 enthalten voneinander nahezu unabhängig Informationen über das von der Sendeeinrichtung der Ultraschall-Messvorrichtung ausgesendete Sendesignal s(T) und werden durch den Zeitverlauf der Sendefrequenz des Sendesignals s(T) vorgegeben.

Unter dem verwendeten Begriff positive Periodendauer PP1 - PP6 ist ein zeitlicher Abstand zwischen zwei aufeinander folgenden Durchgängen von einem "kleineren Wert" zu einem "größeren Wert" des Sendesignals s(T) bezogen auf den Bezugswert SB zu verstehen. Entsprechend ist unter einer negativen Periodendauer PN1 - PN6 der zeitliche Abstand zwischen zwei aufeinander folgenden Durchgängen von einem "größeren Wert als SB" zu einem "kleineren Wert als SB" zu verstehen ist.

Weitere Darstellungsmöglichkeiten für den Zeitverlauf der Momentanfrequenz des Sendesignals s(T) sind eine Folge von positiven Periodendauer-Abweichungen von einer positiven Bezugsperiodendauer und/oder eine Folge von negativen Periodendauer-Abweichungen von einer negativen Bezugsperiodendauer. Beispielsweise ist die positive Bezugsperiodendauer, bzw. die negative Bezugsperiodendauer, ein Mittelwert der positiven Periodendauern PP1 - PP6, bzw. der negativen Periodendauern PN1 - PN6. Alternativ kann der Begriff positive/negative Periodendauer auch äquivalent für beispielsweise positive/negative Halbperiodendauern, d.h. dem Zeitabschnitt zwischen dem Wechsel von einem kleineren/größeren Signalwert zu einem größeren/kleineren Signalwert als SB verwendet werden.

Der Frequenzverlauf des Sendesignals s(T) kann auch als Folge von Frequenzen und/oder Folge von Frequenz-Abweichungen von einer Bezugsfrequenz wiedergegeben werden, beispielsweise durch Bildung des entsprechend reziproken Werts. Bei den im Weiteren beschriebenen Ausführungsformen der vorliegenden Erfindung können somit anstelle der positiven Periodendauern PP1 - PP6, der negativen Periodendauern PN1 - PN6, der positiven Periodendauer-Abweichungen von einer positiven Bezugsperiodendauer und/oder der negativen Periodendauer-Abweichungen von einer negativen Bezugsperiodendauer auch Frequenzen und/oder Frequenz-Abweichungen von einer Bezugsfrequenz untersucht werden. Selbstverständlich können die Frequenzen und/oder Frequenz-Abweichungen von einer Bezugsfrequenz auch zusätzlich zu den aufgezählten Werten ausgewertet werden. Da der Zusammenhang zwischen einer Periodendauer und einer Frequenz dem Fachmann selbstverständlich ist, wird hier jedoch kaum auf diese Ausführungsformen eingegangen.

Im Folgenden wird für eine klarere Ausdrucksweise nur von einem Ermitteln und von einem Auswerten von Periodendauer-Abweichungen gesprochen. Zwischen positiven Periodendauern PP1 bis PP6 und negativen Periodendauern PN1 bis PN6, bzw. zwischen deren Abweichungen, wird dabei nicht unterschieden. Es wird hier jedoch darauf hingewiesen, dass unter den genannten Periodendauern positive Periodendauern PP1 bis PP6, negative Periodendauern PN1 bis PN6, positive Periodendauer-Abweichungen von einer positiven Bezugsperiodendauer und/oder negative Periodendauer-Abweichungen von einer negativen Bezugsperiodendauer verstanden werden können. Der Begriff der Periodendauer-Abweichung stellt somit das Synonym für die unterschiedlichen Darstellungsformen ein und des gleichen Effekts dar.

Die von der Sendeeinrichtung der Ultraschall-Messvorrichtung ausgesendeten Periodendauern des Sendesignals s(T) werden bereits bei der Reflexion an einem einzelnen Objektpunkt, welcher sich mit einer Relativgeschwindigkeit ungleich Null gegenüber der Ultraschall-Messvorrichtung bewegt, und/oder bei einer Relativgeschwindigkeit ungleich Null zwischen einem fahrzeugeigenen Sender, dem Objektpunkt und einem fahrzeugeigenen Empfänger modifiziert. Auch durch Überlagerung der Reflexionen an verschiedenen Reflexionspunkten eines Objekts und/oder aufgrund der Übertragungseigenschaften der Antennen und/oder des Ausbreitungsmediums können die Signale auf dem Weg zwischen dem Sender und dem Empfänger verändert werden. Des Weiteren können mehrere Sendesignale Verwendung finden, die sich unter anderem im Zeitverlauf der Periodendauer/Momentanperiodendauer des Sendesignals unterscheiden. Dadurch können die von einer Empfangseinrichtung der Ultraschall-Messvorrichtung empfangenen Periodendauern des Empfangssignals andere Werte als die ausgesendeten Periodendauern des Sendesignals s(T) annehmen. Zusätzlich wird hier darauf hingewiesen, dass auch eine Objektform eines reflektierenden Objekts modifizierte Periodendauern des reflektierten Ultraschallsignals bewirken kann. Über das Auswerten der Periodendauern des empfangenen Ultraschallsignals lassen sich somit zusätzlich zu mindestens einer Relativgeschwindigkeit auch Informationen über eine Objektform, und damit über einen Objekttyp, gewinnen. Ebenso lassen sich anderweitige Informationen von einer sendenden Einrichtung zu einer empfangenden Einrichtung übertragen.

Mit dem nachfolgend beschriebenen Verfahren der Intrapulsanalyse, bevorzugt ausgeführt als signalstärkegewichtete Intrapulsanalyse, lassen sich diese Effekte mit relativ geringem Zusatzaufwand aus dem Empfangssignal herausfiltern und als Informationen zur Information des Fahrers, zur Unterstützung des Fahrers beim Lenken, Beschleunigen und/oder Bremsen, zur Parametrierung und/oder zum Betätigen von Einrichtungen zur Senkung von Unfallfolgen nutzen.

Beispielsweise wird bei den Empfangssignalen die Folge der Periodendauer-Abweichungen gegenüber zumindest einer Referenz untersucht, bevorzugt in dem Abschnitt des Empfangssignals mit hoher Signalstärke. Die genauere Vorgehensweise der Intrapulsauswertung wird weiter unten anhand von Beispielen beschrieben.

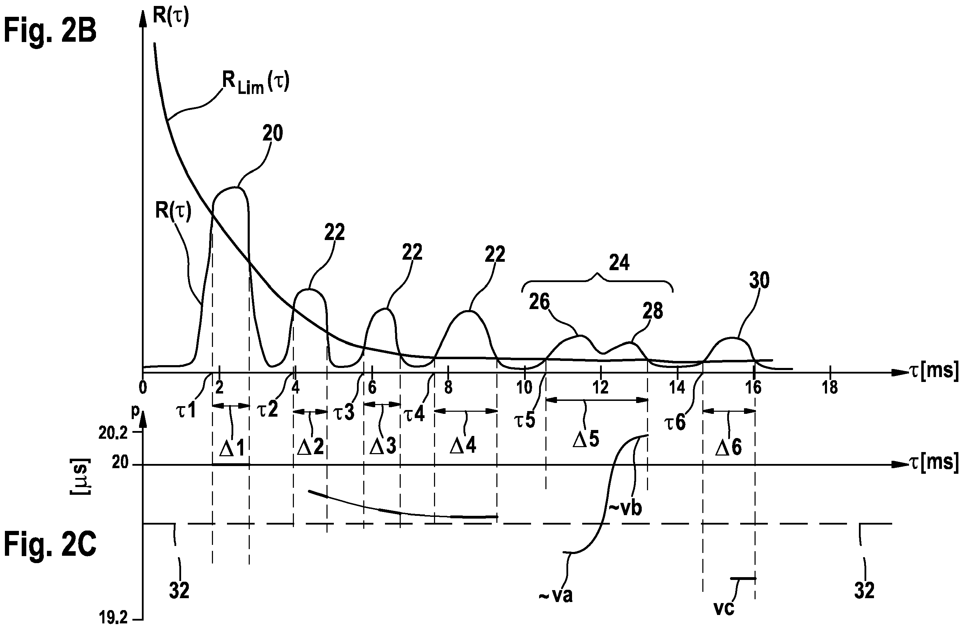

Fig. 2A bis C zeigen ein Beispiel für eine Anwendungsmöglichkeit der Ultraschall-Messvorrichtung, wobei in Fig. 2A eine Verkehrssituation, in Fig. 2B eine zeitliche Intensitätsverteilung eines empfangenen Ultraschallsignals und in Fig. 2C die aus dem Ultraschallsignal ermittelbaren Relativgeschwindigkeiten der anderen Verkehrsteilnehmer dargestellt sind.

Bei der in Fig. 2A schematisch wiedergegeben Verkehrssituation fährt ein Fahrzeug 10 mit einer Geschwindigkeit v0 in eine Fahrtrichtung 12. Das Fahrzeug 10 ist beispielhaft mit einer Ultraschall-Messvorrichtung mit den Sende- und Empfangseinrichtungen 13 und 14 ausgestattet. Die Sende- und Empfangseinrichtungen 13 und 14 sind so an dem Fahrzeug 10 befestigt, dass die von der Sendeeinrichtung 13 ausgesendeten Ultraschallsignale auf die in Fahrtrichtung 12 vor dem Fahrzeug 10 gelegene Teilumgebung treffen. Dabei kann die mindestens eine Sendeeinrichtung 13 beim Aussenden der Ultraschallsignale einen ausreichend großen Öffnungswinkel für ein gutes Abdecken der in Fahrtrichtung 12 vor dem Fahrzeug 10 gelegene Teilumgebung aufweisen.

Die in Fig. 2A dargestellte Anordnung eines Senders 13 und eines Empfängers 14 ist nur beispielhaft zur einfachen Verdeutlichung des Prinzips zu verstehen. Es wird hier ausdrücklich auf die bekannte Tatsache hingewiesen, dass heute an ein und der gleichen Position befindliche übliche Ultraschallwandler abwechselnd die Funktion des Senders 13 und des Empfängers 14 übernehmen können und das üblicher Weise mehr als zwei Ultraschallwandler an einem Fahrzeug 10 verbaut sind.

Derartige Messvorrichtungen auf Ultraschall-Basis lassen sich vergleichsweise kostengünstig herstellen. Sie sind gegenüber Verschmutzungen relativ robust. Zusätzlich weist die Funktionsfähigkeit einer Ultraschall-Messvorrichtung eine geringe Anfälligkeit gegenüber klimatischen Einflüssen, wie Dunkelheit, Nebel, Regen und Schnee auf.

Bei der dargestellten Verkehrssituation befinden sich die Fahrzeuge 16a, 16b und 16c in Fahrtrichtung 12 vor dem Fahrzeug 10. Die Fahrzeuge 16a, 16b und 16c liegen damit innerhalb des Messbereichs der Sende- und Empfangseinrichtungen 13 und 14. Jedes der Fahrzeuge 16a bis 16c weist eine andere Relativgeschwindigkeit va, vb oder vc gegenüber dem Fahrzeug 10 auf. Während das Fahrzeug 16b mit der Relativgeschwindigkeit vb ebenfalls in die Fahrtrichtung 12 fährt, fahren die Fahrzeuge 16a und 16c mit ihrer jeweiligen Relativgeschwindigkeit va oder vc entgegen der Fahrtrichtung 12.

Jedes der Fahrzeuge 16a, 16b und 16c reflektiert einen Teil der von der mindestens einen Sendeeinrichtung 13 ausgesendeten Ultraschallsignale zurück zu dem Fahrzeug 10. Wie weiter unten noch genauer ausgeführt wird, befinden sich in Fig. 2A die Fahrzeuge 16a und 16b so nahe aneinander, dass sich ihre Reflexionen zu einer anhand der Intensitätsverteilung nicht unterteilbaren Gesamtreflexion überlagern. Dies ist häufig der Fall, sofern sich mehrere Objekte in ungefähr gleicher Entfernung zu dem Fahrzeug 10 befinden.

Auch an der von dem Fahrzeug 10 befahrenen Straße wird ein Teil der ausgesendeten Ultraschallsignale reflektiert. Dies ist schematisch wiedergegeben über die Bodenhindernisse 18, welche zwischen dem Fahrzeug 10 und den Fahrzeugen 16a bis 16c liegen.

Im Folgenden wird erläutert, wie über ein Auswerten der reflektierten Ultraschallsignale die dargestellte Verkehrssituation mittels der Ultraschall-Messvorrichtung erfassbar ist. Ein in Fig. 2B gezeigtes Koordinatensystem weist als Abszisse die Zeitachse T und als Ordinate einen Intensitätsverlauf R(T) eines empfangenen Echos des von mindestens einer Sendeeinrichtung ausgesendeten Ultraschallsignals auf. Die über die Zeitachse T dargestellte Gesamtzeitdauer liegt beispielsweise bei 18 ms. Zusätzlich zu der ermittelten zeitlichen Intensitätsverteilung R(T) des Echos ist in dem Koordinatensystem auch eine (zeitlich variable) Bedeutsamkeitsschwelle RLim(T) wiedergegeben, welche beispielsweise nach einem Aussenden eines Ultraschallsignals zum Zeitpunkt T = 0 exponential abnimmt. Von der Intensitätsverteilung R(T) werden vorzugsweise nur die Überschreitungsbereiche 20 bis 30 für die Auswertung berücksichtigt, die über der Bedeutsamkeitsschwelle RLim(T) liegen. Bevorzugterweise wird eine zeitlich variable Bedeutsamkeitsschwelle R(T) verwendet. Als Alternative zu der zeitlich variablen Bedeutsamkeitsschwelle RLim(T) kann jedoch auch ein zeitlich konstanter Schwellwert verwendet werden.

Bevorzugt wird bei der Intrapulsanalyse von Ultraschall-Fahrerassistenzsystemen die Änderung des Zeitverlaufs der Periodendauern des empfangenen Impulses gegenüber einem Referenzzeitverlauf, insbesondere nur bei hohen Signalstärken des Empfangssignals, durchgeführt. Bei einer solchen signalstärkegewichteten Momentanperiodendauerauswertung wird für jeden Überschreitungsbereich 20 bis 30 die zugehörige Periodendauer p mittels einer weiter unten beschriebenen Vorgehensweise bestimmt. Die Ordinate des Koordinatensystems der Fig. 2C gibt die Werte der ermittelten Momentanperiodendauern p der Überschreitungsbereiche 20 bis 30 an. Die Abszisse des Koordinatensystems der Fig. 2C ist die Zeitachse T. Fig. 2C zeigt, wie beispielsweise infolge des Dopplereffekts die Periodendauern p der an den Objekten 16a bis 16c und 18 reflektierten Ultraschallsignale verändert werden. Die ermittelten Periodendauern p liegen bei dem dargestellten Beispiel in einem Wertebereich zwischen 19,2 μs und 20,2 μs.

Bei dem hier beschriebenen Beispiel ist die Ultraschall-Messvorrichtung dazu ausgelegt, Ultraschallsignale mit einer nahezu konstanten Momentanperiodendauer p von 20μs auszusenden. Wie weiter unten ausgeführt wird, sind jedoch auch andere Zeitverläufe der Momentanperiodendauern des Sendesignals, insbesondere zum Unterscheiden zwischen verschiedenen Signalformen, denkbar. Des Weiteren weist die Ultraschall-Messvorrichtung eine Auswerteeinrichtung auf, welche dazu ausgelegt ist, die Geschwindigkeit v0 des Fahrzeugs 10 gegenüber der Fahrbahn fortlaufend zu ermitteln und ein der Geschwindigkeit v0 entsprechendes Referenzsignal 32 zu berechnen. Das Referenzsignal 32 entspricht dabei der Dopplerverschiebung einer Reflektion an einem sich mit der Geschwindigkeit v0 bewegenden Objekt. In Fig. 2C liegt das Referenzsignal 32 bei ca. 19,7μs. Der Wert des Referenzsignals wird hier beispielhaft durch die Relativgeschwindigkeit des Fahrzeugs über dem Grund vorgegeben.

Ab dem Zeitpunkt T1 wird für die Zeitdauer Δ1 das Übersprechen 20 als Überschreitungsbereich 20 empfangen. Der Überschreitungsbereich 20 weist eine Momentanperiodendauer p gleich dem ausgesendeten Ultraschallsignal auf und ist daran eindeutig als Übersprechen zwischen zwei sich mit der Relativgeschwindigkeit 0 bewegenden Sensoren 13 und 14 erkennbar, sofern seine Echolaufzeit T1 dem Abstand der beiden Sensoren 13 und 14 bei der aktuellen Schallgeschwindigkeit entspricht.

Zu den Zeiten T2 bis T4 werden für die Zeitdauern Δ2 bis Δ4 die an den Bodenhindernissen 18 reflektierten Bodenechos 22 als Überschreitungsbereiche 22 empfangen. Die Bodenechos 22 haben Momentanperiodendauern p, welche innerhalb eines Wertebereichs zwischen der Periodendauer p des ausgesendeten Ultraschallsignals und dem Referenzsignal 32, dass der Geschwindigkeit v0 des Fahrzeugs entspricht, liegen. Die Abweichungen zwischen den Periodendauern p der Bodenechos 22 ergeben sich aufgrund eines "schrägen Blicks" der Ultraschall-Messvorrichtungen auf den Boden. Die Bodenechos 22 können anhand dieser Merkmale bei der Intrapulsanalyse der Verläufe der Momentanperiodendauern leichter als Bodenechos 22 erkannt und herausgefiltert werden.

Ab dem Zeitpunkt T5 wird in einer Zeitdauer Δ5 ein überlagertes Empfangssignal 24 empfangen, welches sich aus dem reflektierten Signal 26 des Fahrzeugs 16a und aus dem reflektierten Signal 28 des Fahrzeugs 16b zusammensetzt. Ein großer Vorteil der hier erläuterten Ultraschall-Messvorrichtung liegt darin, dass sie anhand des Zeitverlaufs der Momentanperiodendauer des Empfangssignals erkennen kann, dass sich das Empfangssignal 24 aus den beiden einzelnen Signalen 26 und 28 zusammensetzt. Dies geschieht, indem die Ultraschall-Messvorrichtung den Zeitverlauf der Momentanperiodendauern p des Empfangssignals 24 hinsichtlich der Veränderung gegenüber dem ausgesandten Signal untersucht, und dabei erkennt, dass dem Zeitverlauf der Momentanperiodendauern p des Empfangssignals 24 zwei Relativgeschwindigkeiten va und vb zuordbar sind (siehe Fig. 2C). Die Ultraschall-Messvorrichtung erkennt somit, dass dem Empfangssignal 24 zwei verschiedene Objekte mit unterschiedlichen Relativgeschwindigkeiten va und vb zuordbar sind. Beispielsweise kann über das Erkennen, dass das Empfangssignal 24 nicht die Position eines kompakten Einzelobjekts sondern die Positionen zweier verschiedener Objekte mit unterschiedlichen Relativgeschwindigkeiten va und vb angibt, eine Unfallsituation erkannt und noch rechtzeitig verhindert werden.

Dies ist ein wesentlicher Vorteil der hier erläuterten Ultraschall-Messvorrichtung gegenüber einem herkömmlichen Ultraschallsystem. Durch Analyse der mindestens einen Momentanperiodendauer p (bzw. der mindestens einen Momentanfrequenz) des empfangenen Echos kann eine derartige räumliche Überlagerung der Objekte erkannt und für die Auswertung der empfangenen Signale aufgehoben werden. Besonders leicht lassen sich dabei die Objekte unterscheiden, wenn sie zueinander eine unterschiedliche Relativbewegung zum Betrachter aufweisen. Beispielsweise sind die Fahrzeuge 16a und 16b aufgrund ihrer unterschiedlichen Relativbewegungen durch eine Auswertung der Momentanperiodendauer p deutlich unterscheidbar. Mit Hilfe der Auswertung der Momentanperiodendauer p lassen sich somit aus einem Echo erheblich genauere Informationen über die aktuelle Verkehrssituation gewinnen.

Ein herkömmliches Ultraschallsystem ermittelt die Objekte in der Umgebung eines Fahrzeugs lediglich unter Berücksichtigung der Zeiten der ermittelten Überschreitungsbereiche 20 bis 30. Herkömmliche Ultraschallsysteme sind lediglich dazu ausgestattet, anhand eines Überschreitens der Entscheidungsschwelle RLim(T) festzustellen, ob ein empfangener Überschreitungsbereich 20 bis 30 des Echos einem Objekt zuzuordnen ist. Damit ist die Objektklassifizierung bei einem herkömmlichen Ultraschallsystem auf eine Analyse der Echostärke (Intensitätsverteilung R(T)) beschränkt. Es bedarf deshalb mehrerer Echozyklen, um eine Relativbewegung eines Objekts gegenüber dem Fahrzeug 10 zu erkennen. Will man bei hohen Reichweiten eine Echovieldeutigkeit vermeiden, so bedarf es einer großen Echoberuhigungszeit. Insbesondere bei größeren Relativgeschwindigkeiten steigt damit jedoch die Wahrscheinlichkeit, dass der Sendezyklus des Systems zu lang dauert, um diese schnellen Relativgeschwindigkeiten zuverlässig zu bestimmen.

Darüber hinaus können Ultraschallsysteme nach dem Stand der Technik eng nebeneinander liegende Objekte (Fahrzeug 16a und 16b) häufig nicht anhand der Intensitätsverteilung R(T) des Echos unterscheiden. Somit ist keine verlässliche Zuordnung eines Überschreitungsbereichs des Echos an ein bestimmtes Objekt möglich. Auch die Verwendung von mehreren Schwellen kann dieses Problem oft nicht lösen. Nach dem Stand der Technik können eng nebeneinander liegende Objekte deshalb nur mit Hilfe weiterer Echoinformationen, wie beispielsweise einer Nutzung eines Direktechos, einer Auswertung der Echos weiterer Sensoren und/oder durch wiederholtes Senden (bevorzugt durch an anderen Fahrzeugpositionen angeordneten Sensoren), separiert werden. Insbesondere bei höheren Objektentfernungen ist ein Unterscheiden jedoch in der Regel nicht möglich.

Das an dem Fahrzeug 16c reflektierte Ultraschallsignal wird ab der Zeit T6 für die Zeitdauer Δ6 als Empfangssignal 30 detektiert. Auch für den Überschreitungsbereich 30 kann eine Relativgeschwindigkeit ermittelt werden. Die ermittelten Relativgeschwindigkeiten va, vb oder vc können in einem Bereich liegen, welcher deutlich von einer typischen Geschwindigkeit eines Fußgängers und/oder eines Radfahrers abweicht. Somit kann anhand der ermittelten Relativgeschwindigkeiten va, vb oder vc den zugehörigen Objekten bereits häufig ein Objekttyp zugeordnet werden. Beispielsweise ist die Ultraschall-Messvorrichtung bei dem vorliegenden Beispiel dazu ausgelegt, festzulegen, dass die Empfangssignale 26, 28 und 30 mit hoher Wahrscheinlichkeit die Positionen, Formen und/oder Geschwindigkeiten von Fahrzeugen 16a, 16b und 16c wiedergeben.

Insbesondere in komplexen Situationen kann anhand des Wissens über die Relativbewegung eines Objekts dessen vermeintlicher Aufenthaltsort in den nachfolgenden Echozyklen genauer bestimmt werden und durch Vergleich dieser Prädiktionen mit den tatsächlichen in den nachfolgenden Echozyklen auftretenden Echolaufzeiten können die Objektmodelle einschließlich der Bewegungsmodelle plausibilisiert werden.

Des Weiteren kann anhand der in den räumlich verschiedenen Sensorkonstellationen und zu verschiedenen Zeitpunkten bestimmten Echolaufzeiten und Relativbewegungen jeder Reflexpunkt auf einen Referenzzeitpunkt eines räumlichen Referenzkoordinatensystems umgerechnet werden, um somit ein Gesamtbild der Objektszene in einer gemeinsamen Referenz zu erhalten.

Werden von den sendenden Sensoren eines solchen Systems verschiedenartige Sendesignalimpulse verwandt, so kann zwischen den sendenden und den empfangenden Sensoren eine Information, wie z.B. der Sendezeitpunkt, der Sendeort, eine Sensorerkennung, eine Information bezüglich der Fahrweise des eigenen Fahrzeugs und/oder eine Umgebungsinformation, übertragen werden.

Die in Fig. 2B beispielhaft dargestellte Intensitätsverteilung R(T) und die in Fig. 2C dargestellte Empfangssignalstärke-gewichtete Periodendauer p entspricht dem von der Sendeeinrichtung 13 ausgesendeten und anschließend von der Empfangseinrichtung 14 empfangenen Signal der Verkehrsszene.

Ultraschallsignale haben eine vergleichsweise niedrige Ausbreitungsgeschwindigkeit. Dadurch ist der Sendezyklus eines herkömmlichen Ultraschallsystems mit mehreren Antenneneinrichtungen relativ lang. Darüber hinaus wird der Sendezyklus mit wachsender Messentfernung für ein verlässliches Beobachten der Objektszene verlängert. Dies führt dazu, dass eine Information über eine Position der reflektierenden Objektpunkte innerhalb einer Umgebung eines Fahrzeugs sich mittels eines herkömmlichen Ultraschallsystems nur mit einer relativ großen Intervalldauer zwischen den einzelnen Messungen bestimmen lässt. Bei herkömmlichen Ultraschallsystemen ist daher die Häufigkeit, mit der verlässliche aktualisierte Informationen von der Objektszene bestimmbar sind, stark begrenzt.

Da sich die reflektierenden Objektpunkte häufig relativ zu dem Fahrzeug bewegen, erschwert die große Intervalldauer zwischen den einzelnen Messungen das Zuordnen der zu verschiedenen Zeiten ermittelten Merkmale an ein einzelnes Objekt mittels eines herkömmlichen Ultraschallsystems. Somit ist die Eindeutigkeitsbedingung beim Zuordnen bei einem herkömmlichen Ultraschallsystem nur ungenügend erfüllt. Insbesondere sind herkömmliche Ultraschallsysteme aufgrund der begrenzten Häufigkeit beim Ermitteln einer aktuellen Lage eines reflektierenden Objektpunks für ein Bestimmen einer Geschwindigkeit eines reflektierenden Objekts innerhalb der Umgebung eines Fahrzeugs anhand der sich ändernden Abstandsinformation nur eingeschränkt geeignet. Dies schränkt die Verwendungsmöglichkeiten eines herkömmlichen Ultraschallsystems, insbesondere für ein automatisches Fahrzeugsteuersystem, stark ein.

Des Weiteren tritt bei der Verwendung eines herkömmlichen Ultraschallsystems oft das Problem auf, dass laufzeitmäßig versetzte Einzelreflexionen von mehreren Objektpunkten zu Überlagerungen an dem Gesamtreflexionssignal führen. Entsprechende Überlagerungen von Einzelreflexionen treten beispielsweise auf, wenn ein Sendesignal an mehreren Objekten und/oder an einer unebenen Oberfläche eines einzelnen Objekts reflektiert wird. Abhängig von der sich aus den Laufzeitunterschieden ergebenden Phasenlage der Einzelreflexionen zueinander können die Überlagerungen ein Verstärken, ein Reduzieren oder ein Auslöschen des Gesamtreflexionssignals bewirken. Somit erschweren die Überlagerungen der Einzelreflexionen das Festlegen verlässlicher Positions- und Geschwindigkeitsdaten oder das Ermitteln einer Objektform mittels des herkömmlichen Ultraschallsystems.

Über die hier beschriebene Ultraschall-Messvorrichtung sind diese Funktionsbeeinträchtigungen jedoch behebbar.

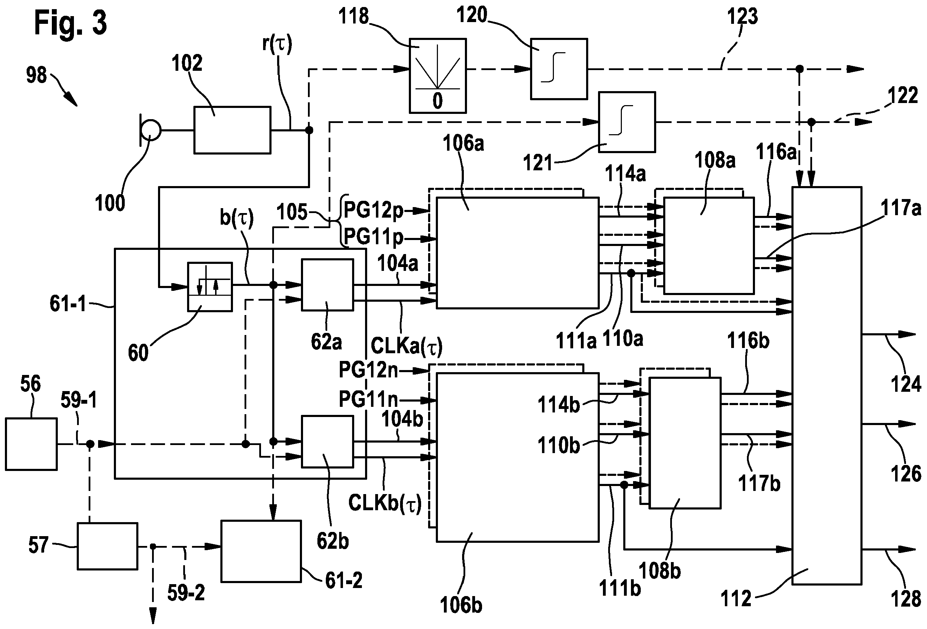

Fig. 3 zeigt ein Blockdiagramm zum Darstellen einer Schaltungsvorrichtung einer ersten Ausführungsform der Ultraschall-Messvorrichtung.

Auf eine Darstellung der Sender wird bei der in Fig. 3 schematisch wiedergegebene Schaltungsvorrichtung 98 verzichtet, da neben dem Wissen über die Form des Sendeimpulses/der Sendeimpulse, wie anhand von Fig. 1 erläutert, die im Weiteren beschriebene Intrapulsanalyse ausschließlich im Empfangspfad stattfindet.

Die schematisch wiedergegebene Schaltungsvorrichtung 98 umfasst einen Akustik-Elektro-Wandler 100, mit welchem ein empfangenes Ultraschallsignal in ein Empfangssignal, z.B. ein elektrisches Signal, umgewandelt wird. Das Empfangssignal wird anschließend an eine Signalaufbereitungs-Einheit 102 ausgegeben. Beispielsweise enthält die Signalsaufbereitungs-Einheit 102 einen Verstärker und/oder einen Bandpassfilter für ein Herausfiltern von unerwünschten Signalanteilen und/oder eine Frequenzgangkorrektur. Die Signalaufbereitungs-Einheit 102 stellt an ihrem Ausgang das (aufbereitete) Empfangssignal r(T) bereit.

Die Intrapulsanalyse umfasst je Messzeitbereich zumindest eine Messeinrichtung 61 zur Bestimmung der Momentanperiodendauer-Abweichung Δp oder eines entsprechenden Äquivalentwertes optional gefolgt von mindestens einer Einrichtung zur Bewertung der Momentanperiodendauer-Abweichung 106 je Folge von Referenz-Periodendauer-Abweichungen PG 105 oder anhand einer entsprechenden äquivalenten Referenzfolge wie beispielsweise der Momentanfrequenzabweichung jeweils optional gefolgt von einer Einrichtung zur gütemaßbasierten Signalaufbereitung 108 sowie gefolgt von mindestens einer Einrichtung zur endgültigen Signalentscheidung 112.

Die in Fig. 3 schematisch wiedergegebene Schaltungsvorrichtung 61 ist zum Ermitteln einer Momentanperiodendauer-Abweichung Δp eines Empfangssignals r(T) von einer vorgegebenen Bezugsperiodendauer ausgelegt. Die Schaltungsvorrichtung 61 kann auch so modifiziert werden, dass anstelle einer Momentanperiodendauer-Abweichung Δp eine Periodendauer, eine Frequenz und/der eine Frequenz-Abweichung von einer vorgegebenen Referenzfrequenz ermittelt werden. Ebenso können die von de Schaltungsvorrichtung 61 ermittelten Momentanperiodendauer-Abweichungen Δp auch in eine Periodendauer, eine Frequenz und/oder eine Frequenz-Abweichung umgewandelt werden.

Es können auch mehrere Messeinrichtungen 61 zeitversetzt gestartet werden und jeweils über mehrere (Halb-)Perioden eine mittlere Periodendauer-Abweichung messen. Anschließend kann jeweils in einer oder in mehreren nach geschalteten Auswerteeinheiten eine endlich lange Referenzfolge der Periodendauer-Abweichungen jeweils mit entsprechend gleich langen Ausschnitten aus der Folge von gemessenen Momentanperiodendauer-Abweichungen verglichen werden. Dabei wird beispielsweise zuerst ein Mittelwert für die Abweichung der jeweiligen Wertepaare bestimmt. Optional kann auch ein grobes Maß für die Streubreite der Abweichung der jeweiligen Wertepaare der Folgen bestimmt werden. Ebenso kann ein Maß, das beschreibt, welche Wertepaare der jeweils miteinander verglichenen Folgen besonders stark voneinander abweichen, gebildet und ausgewertet werden.

Mit jeder Messeinrichtung 61-1, 61-2, ... wird aus dem aufbereiteten Empfangssignal r(T) je zeitversetztem Messzeitbereich -1, -2, ... und je nachdem, ob die Richtung des Pegelwechsels als positive und negative Momentanperiodendauer-Abweichung getrennt vermessen wird oder nicht, jeweils ein Maß für die momentane Periodendauer-Abweichung Δp 104 bestimmt und an die nachfolgende Einheit übergeben, wobei die Übergabe bevorzugt mittels Taktsignal CLK synchronisiert wird. Der Messzeitbereich einer jeden Messung wird jeweils mit einem Startsignal 59-1, 59-2, ... gestartet. Bei gleichzeitigem Messen in mehreren zeitversetzten Messzeitbereichen sind die Startsignale 59-1, 59-2, ... mittels Taktzeitbasis 56 und geeigneten Signalverzögerungen 57 oder äquivalenter Takterzeuger zueinander zu verzögern.

Gleichzeitiges Messen in zueinander zeitversetzten Messbereichen jeweils über ein oder mehrere Periodendauern erfordert zwar mehrere gleichzeitig arbeitende Messeinrichtungen, gestattet aber andererseits geringere Anforderungen an die Referenzzeitbasis zur Bestimmung der Momentanperiodendauer-Abweichung, als bei Messungen über nur eine Halbperiode oder Periode des Ultraschallsignals.

Da die Stufen zum zeitversetzten Messen bis auf das zeitverzögerte Startsignal 59-2, 59-3, ... gleichartig aufgebaut sind, sind diese Stufen im unteren Teil von Fig. 3 nur beispielhaft anhand 61-2 angedeutet.

Der Block 61-1 besteht im dargestellten Fall aus zwei Messeinrichtungen a und b zur zeitversetzten Messung einer positiven und einer negativen Momentanperiodendauer-Abweichung 104a-1 und 104b-1, wobei sich im dargestellten besonderen Fall alle Messeinrichtungen 62a-1, 62a-2, ..., 62-b1, 62-b2, ... einen Schwellwertschalter 60 teilen, wodurch ein zusätzliche Aufwand umgehbar ist.

In einer bevorzugten Ausführung wird die Synchronisation der Messeinrichtungen direkt aus dem Binärsignal b(T) erzeugt, das somit auch die Aufgabe des Synchronsignals 59 übernimmt.

In einer weiteren bevorzugten vereinfachten Ausführung gibt es je Empfangsstufe nur je eine Messeinrichtung zur Messung der positiven und zur Messung der negativen Momentanperiodendauer-Abweichung 104a und 104b, so dass keine zusätzliche Verzögerungsstufe 57 erforderlich ist. Beispielsweise misst diese Einrichtung nacheinander die Momentanperiodendauer-Abweichung der positiven und negativen Halbperioden aus und die nachfolgende Einrichtung/en 106a-1, 106a-2, ..., 106b-1, 106b-2, ..., ... werten diese Folgen wie unten näher beschrieben aus.

In einer sehr einfachen Ausführungsform der Intrapulsanalyse wird jeweils der aktuelle Wert der Momentanperiodendauer-Abweichung 104 direkt von der Entscheidungsstufe 112 übernommen.

Das Empfangssignals r(T) wird an einen Schwellwertschalter 60 zum Umwandeln des Empfangssignals r(T) in ein Binärsignal b(T) ausgegeben. Der Schwellwertschalter 60 legt fest, bei welcher Amplitude des Empfangssignals r(T) das Binärsignals b(T) mit den zwei Pegeln Low und High ausgegeben wird. Bevorzugt sollte der Schwellwert des Schwellwertschalters identische mit dem schwellwert RLim(T) sein, insbesondere um Synergien zur Aufwandsminimierung mit anderen Funktionen in der Empfängerschaltung zu erreichen. Das Binärsignal b(T) wird an einem ersten und an einem zweiten Auswertepfad bereitgestellt.

Jeder der beiden Auswertepfade weist an seinem Anfang eine Schaltung 62a oder 62b auf. Die Schaltung 62a ist dazu ausgelegt, anhand des Binärsignals b(T) positive Momentanperiodendauer-Abweichungen 104a von einer vorgegebenen positiven Bezugsperiodendauer zu ermitteln. Entsprechend ist die Schaltung 62b dazu ausgelegt, anhand des Binärsignals b(T) negative Momentanperiodendauer-Abweichungen 104b von einer negativen Bezugsperiodendauer zu bestimmen. Die Zeitmessung zum Bestimmen einer positiven und einer negativen Momentanperiodendauer-Abweichung erfolgt vorzugsweise durch Auswerten eines Low-High-Pegelwechsels bzw. eines High-Low-Pegelwechsels. Extrem abweichende Momentanperiodendauer-Abweichungen können dabei von den beiden Schaltungen 62a und 62b schon herausgefiltert werden, beispielsweise indem vorab ein Bereich gültiger Messwerte festgelegt und das Nichteinhalten durch die Schaltungen 62 kenntlich gemacht wird.

Soll das Empfangssignal anhand der Intrapulsanalyse dahingehend untersucht werden, welches der verschiedenen möglichen Sendesignale und/oder Objekt zu dem Empfangssignal geführt haben und dies gegebenenfalls noch bei Verwendung mehrerer Messeinrichtungen 61a-1, 61a-2, ..., 61b-1, 61b-2, ... so ist jedes der Momentanperiodendauern 104... jeweils mit den für die möglichen unterschiedlichen Sendesignale und/oder Objekte repräsentativen Referenzen PG ... 105 in jeweils einem Block 106... zu vergleichen. Jeweils infolge eines solchen Vergleichs wird die rohen mittleren Periodendauer-Abweichung Δprr einer Folge von Momentanperiodendauer-Abweichungen jeweils bezüglich einer Referenzfolge PG ... an die nachfolgende Stufe übergeben.

Neben der rohen mittleren Periodendauer-Abweichung Δprr erzeugt die Einrichtung 106 je Taktzyklus optional einen Mustervektor $\varepsilon$, der beschreibt, auf welche Weise die aktuell untersuchte Folge von Momentanperiodendauer-Abweichungen von der Referenzfolge PG 105 abweicht, sowie ein rohes Maß σr für die Streuung des Mittelwertes. Alle drei Größen Δprr, $\varepsilon$ und σr und werden mittels Datenleitungen 104, 110 an die nachfolgende Einrichtung übergeben.

In der optional jeweils folgenden Stufe zur gütemaßbasierten Signalaufbereitung 108 erfolgt bevorzugt je Taktschritt eine Ergebnisbewertung anhand der Zwischengrößen Δprr, ε und σr.
Idealer Weise weist im Empfangszeitpunkt der Abweichungsvektor ε aus, dass sich die gemessene Folge der Momentanperiodendauer-Abweichungen bis auf einen konstanten Wert Δprr nicht von der Folge der Referenz-Periodendauer-Abweichungen PG unterscheidet, und dass auch das Maß für die mittlere Abweichung σr eine große Ähnlichkeit der beiden Folgen in diesem Zeitpunkt ausweist, so dass die Stufe zur gütemaßbasierten Signalkorrektur in diesem Zeitpunkt keine Korrektur vornehmen muss und die nachfolgende Entscheidungseinrichtung 112 bei hinreichend großer Signalstärke 123 und Signaldauer 122 daraufhin weiterleiten kann, dass in diesem Zeitpunkt eine der Referenz PG ähnlicher Signalpuls mit einer dem Periodendauerversatz Δprr entsprechenden Relativbewegung_empfangen wurde. Findet die Entscheidung in 112 durch Auswertung der Vergleiche mit mehreren Referenzen PG... statt, so repräsentiert eine Referenz zumindest eine Signalform und/oder ein Objekt, wodurch in 124 neben der Relativbewegung Informationen über die detektierte Signalform und/oder Objektart übermittelt wird.

In allen anderen von diesem Idealfall abweichenden Situationen bereitet die Stufe zur gütemaßbasierten Signalaufbereitung 108 die rohen Zwischenwerte korrigierend auf, wie es beispielsweise weiter unten beschrieben ist.

Wenn der oben beschriebene Idealfall nicht auftritt und bei einer hohen Echostärke keines der die nebeneinander ablaufenden Vergleiche der Momentanperiodendauer-Abweichungen mit den Referenzen PG... repräsentierenden Abweichungsmaße σ hinreichend klein ist, kann der Entscheider 112 weiterleiten, dass die aktuell hohe Empfangsstärke keinem der Referenzen entspricht oder aber dass die aktuell hohe Empfangsstärke der Referenz PG am ähnlichsten ist, deren Abweichungsmaß σ im Verhältnis zu den anderen am kleinsten ist. Welches dieser beiden Informationsarten kann beispielsweise anhand der Größe der Abweichungsmaße σ der Teilanalysen entschieden werden.

Die von der Schaltung 62a ermittelten positiven Momentanperiodendauer-Abweichungen werden als Datensignal 104 zusammen mit einem Taktsignal CLK(T) an eine Recheneinrichtung 106a bereitgestellt. Die Recheneinrichtung 106a normiert die eingehende Folge von gemessenen Momentanperiodendauer-Abweichungen jeweils anhand einer Folge von Referenzperiodendauer-Abweichungen PG und ist dazu ausgelegt, eine mittlere positive Momentanperiodendauer-Abweichung, die einzelnen Momentanperiodendauer-Abweichungen und/oder die Summe der Streuungen der Momentanperiodendauer-Abweichungen zu ermitteln. Die von der Recheneinrichtung 106a berechneten Werte werden anschließend als Datensignal 110 an eine Auswerteeinrichtung 108a ausgegeben.

Die Einrichtung zur Signalaufbereitung 108a führt anhand der an ihrem Eingang anliegenden rohen Werte eine Signalaufbereitung durch indem sie anhand von den übermittelten Gütemaßen die endgültigen Werte für die in diesem Taktschritt berechnete jeweilige Referenzfolge normierte mittlere Periodendauer-Abweichung $\Delta pr$ bzw. ein daraus berechneter äquivalenter Wert, wie z.B. die Relativgeschwindigkeit, und/oder ein aufbereitetes Maß $\sigma$, dass beschreibt, mit welcher Wahrscheinlich die in der jeweiligen Teilanalyse mit der jeweiligen Referenzfolge verglichene Folge von gemessenen Momentanperiodendauerabeichungen identisch ist. Dabei kann die Auswerteeinrichtung 108a dazu ausgelegt sein, über ein Herausfiltern von positiven Momentanperiodendauer-Abweichungen, deren mittlere positive Momentanperiodendauer-Abweichung und/oder Streuungen zu stark von einem vorgegebenen Vergleichswert abweichen, eine optimierte mittlere positive Momentanperiodendauer-Abweichung und/oder optimierte Folgen der positiven Momentanperiodendauer-Abweichungen zu bestimmen und als Datensignale 110 an die Entscheidungseinrichtung 112 auszugeben.

Die von der Schaltung 62b bestimmten negativen Momentanperiodendauer-Abweichungen werden als Datensignal 104b zusammen mit einem Taktsignal CLK(T) an eine Recheneinrichtung 106b ausgegeben. Die Funktion der Recheneinrichtung 106b entspricht der Funktion der schon beschriebenen Recheneinrichtung 106a. Auch der Recheneinrichtung 106b ist eine Auswerteeinrichtung 108b mit der Funktion der Auswerteeinrichtung 108a nachgeschaltet. Die von der Recheneinrichtung 106b berechneten Werte werden als Datensignale 110b, 111b und 114b an die Auswerteeinrichtung 108b ausgegeben, und, sofern die negativen Momentanperiodendauer-Abweichungen einer vorgegebenen Schätzgüte entsprechen, gegebenenfalls nach Aufbereitung in der Stufe zur gütemaßbasierten Signalaufbereitung 108b an die Entscheidungseinrichtung 112 weitergeleitet.

Zusätzlich zu den Komponenten zum Ermitteln und Auswerten der Periodendauer-Abweichungen kann die Schaltungsvorrichtung 98 noch weitere Komponenten 118 und 120 aufweisen. Dies ist über die gestrichelten Linien der Fig. 3 dargestellt. Die Komponenten 118 und 120 sind beispielsweise Gleichrichter 118 und Integrationsfilter 120 und generieren eine Information über die momentane Signalintensität 123. Die Komponenten 118 und 120 können dazu ausgelegt sein, das bereitgestellte Empfangssignal r(T) auf eine aus dem Stand der Technik bekannte Weise bzgl. einer zeitlichen Intensitätsverteilung des Echos auszuwerten (siehe Fig. 2B). Auf diese Weise kann eine Position eines reflektierenden Objektpunkts bzgl. der Ultraschall-Messvorrichtung grob bestimmt werden. Die von den Komponenten 118 und 120 ermittelten Signale 122 und 123 können auch an die Entscheidungseinrichtung 112 ausgegeben werden.

Wie zuvor bereits beschrieben kann jede Kombination aus Art des möglichen Sendesignals, Art des Übertragungsweges, und Art des reflektierenden Objektes jeweils eine eigene Referenzfolge möglicher Momentanperiodendauer-Abweichungen PG... 105 erforderlich machen, so dass für jede der jeweiligen Referenzfolgen eine Teilanalyse, bestehend aus Vergleichseinheit 106 und optional aus einer Einheit zur gütewertbasierten Signalaufbereitung 108 notwendig ein kann. Der erforderliche Aufwand kann sich wie bei dem in Fig. 3 gezeigten Fall um die Zahl der zeitparallel arbeitenden Messeinrichtungen 61 vervielfachen, wenn das Empfangssignal getrennt nach positiven und negativen Periodendauern und/oder jeweils über mehrere Periodendauern analysiert werden sollen. Die auf diese Weise gewonnenen und auf die jeweilige Referenzfolgen PG... basierten Einzelhypothesen der verschiedenen Teilanalysen werden im Anschluss dem Signal-Entscheider 112 zur Beschreibung der im jeweiligen Zeitpunkt jeweils wahrscheinlichsten Empfangshypothese über die Kombination des gesendeten Signals, der zugrunde liegenden Veränderungen im Übertragungsweg und damit auch optional über die Art des reflektierenden Objekts bereitgestellt.

Somit ist die Entscheidungseinrichtung 112 beispielsweise dazu ausgelegt bezüglich der jeweiligen Position jeweils eine Relativgeschwindigkeit und optional eine Objektart in einer Umgebung der Ultraschall-Messvorrichtung zu bestimmen. Sie kann auch erkennen, welche Signalform dem jeweiligen Empfangssignal zugrunde lag.

Ebenso kann die Entscheidungseinrichtung 112 dazu ausgelegt sein, eine Form des mindestens einen Objekts zu erkennen. Insbesondere kann die Entscheidungseinrichtung dazu ausgelegt sein, eine Oberflächenstruktur des mindestens einen reflektierenden Objekts zu detektieren. Anhand der erkannten Form/Oberflächenstruktur und der Relativbewegung kann die Entscheidungseinrichtung 112 auch erkennen, welche Arten von Objekten sich in der Umgebung der Ultraschall-Messvorrichtung befinden. Beispielsweise unterscheidet die Entscheidungseinrichtung 112 zwischen einem Erwachsenen, einem Kind, einem Tier, einer ortsfesten Struktur wie einer Mauer und/oder einem flexiblen und bewegten Gegenstand wie einem Fahrrad.

Als Alternative oder als Ergänzung dazu kann die Entscheidungseinrichtung 112 auch dazu ausgelegt sein, festzustellen, welche Signalform aus einem Satz möglicher Signalformen von einer Sendeeinrichtung der Ultraschall-Messvorrichtung gesendet und anschließend von einem Objekt in der Umgebung der Ultraschall-Messvorrichtung reflektiert wurde. Eine ausführlichere Beschreibung dieses Vorgangs ist unten anhand eines Beispiels gegeben.

Des Weiteren kann die Entscheidungseinrichtung 112 dazu ausgelegt sein, auf der Basis einer geschätzten Objektform und/oder einer geschätzten Bewegungsrichtung die Laufzeit aller Echos eines Sendezyklus auf jeweils einen Beobachtungszeitpunkt zu normieren. Ebenso kann ein Erwartungsbereich der Echolaufzeit von einem reflektierenden Objekt durch das Erkennen der Objektform und der Bewegungsrichtung für die nachfolgenden Sendezyklen besser vorhergesagt werden. Ein Objekt in der Umgebung des Fahrzeugs kann somit gezielter ermittelt und bzgl. seiner Geschwindigkeit und/oder seiner Objektform ausgewertet werden.

Die von der Entscheidungseinrichtung 112 ermittelten Positionsdaten, Geschwindigkeitsdaten, Objektformdaten, Objektoberflächendaten, Objekttypdaten, Objektzuordnungsdaten und/oder Sendesignalformdaten können als Informationssignale 124, 126 und 128 beispielsweise an ein automatisches Fahrzeugsteuersystem, wie z.B. einem automatischen Brems-, Lenkund/oder Beschleunigungssystem, weitergeleitet werden.

Als Alternative zu der dargestellten Schaltungsvorrichtung 98 können die Schaltungen 62a und/oder 62b auch Zeitmesseinrichtungen sein, welche eine zu der Periodendauer-Abweichung äquivalente Größe, wie beispielsweise eine Periodendauer und/oder eine Frequenz (mittels eines Frequenz-Spannungswandlers) und/oder eine Frequenzabweichung, messen. Als Signalformen können Modulationsverfahren, wie beispielsweise Einzelpuls-, Direct-Sequence-Pulse-, Chirp- und Frequency-Hopping-Verfahren, angewendet werden.

Es wird noch einmal darauf hingewiesen, dass anstelle von nur zwei Zeitmesseinrichtungen auch mehrere Zeitmesseinrichtungen zeitversetzt gestartet werden können und somit über mehrere (Halb-)Perioden eine mittlere Periodendauer-Abweichung parallel messen. Anschließend kann in einer oder in mehreren nach geschalteten Auswerteeinheiten eine endlich lange Referenzfolge der Periodendauer-Abweichungen jeweils mit entsprechend gleich langen Ausschnitten aus der Folge von gemessenen Periodendauer-Abweichungen verglichen werden. Dabei wird beispielsweise zuerst ein Mittelwert für die Abweichung der jeweiligen Wertepaare bestimmt. Optional kann auch ein grobes Maß für die Streubreite der Abweichung der jeweiligen Wertepaare der Folgen bestimmt werden. Ebenso kann ein Maß, das beschreibt, welche Wertepaare der jeweils miteinander verglichenen Folgen besonders stark voneinander abweichen, gebildet und ausgewertet werden.

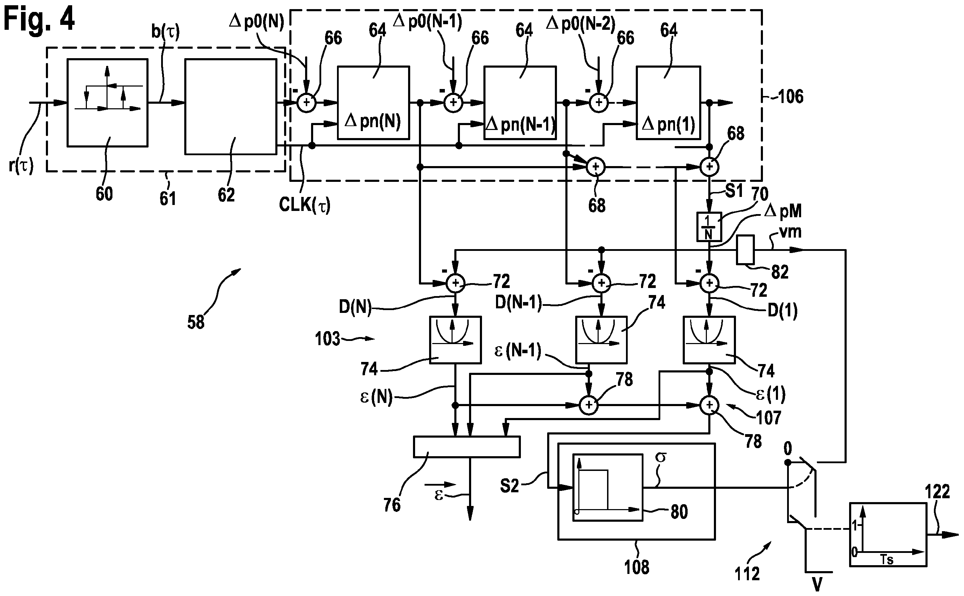

Fig. 4 zeigt ein Blockdiagramm zum Darstellen einer Schaltungsvorrichtung einer zweiten Ausführungsform der Ultraschall-Messvorrichtung.

Die dargestellte Schaltungsvorrichtung 58 zeigt eine konkrete Realisierungsform der in der vorhergehenden Schaltungsvorrichtung beschriebenen Signalanalyse mit genau nur einer Messvorrichtung 61 und einem Vergleicher 106, der genau nur eine Referenz PG verwendet, sowie einer aufwandsarm realisierten Signalbewertung 108 und einer Signalsentscheidung 112. Die Schaltungsvorrichtung 58 ist gegenüber der vorhergehenden Schaltungsvorrichtung nicht nur zum Ermitteln

von Periodendauer-Abweichungen $\Delta p$ eines empfangenen Empfangssignals $r(T)$, sondern auch zum Bestimmen einer Messgüte der ermittelten Periodendauer-Abweichungen $\Delta p$ ausgelegt.

Die Schaltungsvorrichtung 58 weist einen Schwellwertschalter 60 als Untereinheit der Messeinrichtung auf, welcher ein von einer Empfangseinrichtung der Ultraschall-Messvorrichtung bereitgestelltes Empfangssignal $r(T)$, welches beispielsweise auf eine Reflektion eines von der Ultraschall-Messvorrichtung ausgesendeten Ultraschall-Signals an einem Objekt zurückzuführen ist, in ein Binärsignal $b(T)$ umwandelt. Beispielsweise erzeugt der Schwellwertschalter 60 ein Binärsignal $b(T)$, welches für einen positiven Wert des Empfangssignals $r(T)$ den Wert 1 und für einen negativen Wert des Empfangssignals $r(T)$ den Wert 0 aufweist. Vorzugsweise bewertet der Schwellwertschalter 60 das Empfangssignal $r(T)$ mit einer zeitlich variablen Bedeutsamkeitsschwelle, wie oben beschrieben.

Das Binärsignal $b(T)$ wird anschließend an eine Schaltung 62 zum Ermitteln einer Momentanperiodendauer-Abweichungen $\Delta p$ (Momentanperiodendauer-Abweichung) ausgegeben. Die Schaltung 62 kann beispielsweise die unten beschriebenen Komponenten 50 und 52 umfassen.

Die Vergleicherschaltung 106 besteht in dem dargestellten Fall aus der VergleicherEinheit 101, und den Einheiten zur Bestimmung der Schätzgüte, bestehend aus der Einheit 103 zur Bestimmung des Abweichungsmusters sowie aus der Recheneinheit 107 zur Bestimmung der rohen mittleren Abweichungsgüte.

Die dargestellte Einheit zur gütemaßbasierten Signalaufbereitung 108 besteht hier beispielhaft nur aus einem Schwellwertschalter 80, der aus dem rohen Maß der Schätzgüte die aufbereitete Schätzgüte $\sigma$ generiert. In diesem einfachen Beispiel bleibt die Information, die in dem Fehlervektor $\varepsilon$ steckt, in der Signalaufbereitung 108 ungenutzt.

In dem in Fig. 4 dargestellten einfachen Endscheider 112 wird abhängig von der Signalstärke und abhängig von der aufbereiteten Schätzgüte $\sigma$ entschieden, ob die zur Weiterverarbeitung bereitgestellte Geschwindigkeitsinformation $v$ einen gültigen Wert annimmt oder als ungültig gekennzeichnet ist.

Zum genaueren Verständnis der Vergleicherschaltung 106 wird hier darauf hingewiesen, dass die empfangenen Ultraschallimpulse nicht nur bezüglich des Zeitverlaufs der Signalstärke sondern darüber hinaus bezüglich dem Zeitverlauf der Momentanperiode bzw. der Momentanfrequenz innerhalb des Impulses analysiert werden. Die Folge der Periodendauern (Momentanperiodendauern) eines empfangenen Impulses gleichen somit einem Fingerabdruck und offenbaren ein Charakteristikum sowohl für den ausgesandten Sendeimpuls als auch für den Übertragungsweg zum Empfänger. Der Übertragungsweg kann beispielsweise durch die Richtcharakteristik der aussenden und/oder empfangenden Antennen und/oder durch die Objekte, an denen die ausgesandten Impulse auf ihrem Weg zum Empfänger reflektiert werden und deren Relativbewegung zueinander, bestimmt sein. Kennt der Empfänger den für ein Übertragungsszenarium charakteristischen Fingerabdruck, der hier durch eine Folge von Referenzperiodendauern repräsentiert wird, so kann empfängerseitig detektiert werden, welches Szenario bei einem empfangenen Impuls vorlag.

Der Einfachheit wegen kann angenommen werden, dass bei einer Relativbewegung nur zu eine zu der Geschwindigkeit proportionale zeitliche Stauchung oder Dehnung einer Referenzfolge auftritt. Mit der in Fig. 4 dargestellten Schaltung wird am Beispiel von genau einem Fingerabdruck, d.h. einer Referenzfolge bestehend aus N Elementen, gezeigt, wie eine solche Analyse mit einfachen Mitteln realisiert werden kann.

Für diese Analyse werden in dieser konkreten Ausführung mittels des Taktes CLK(T) die durch die Messeinheit 62 gewonnenen Momentanperiodendauer-Abweichungen $\Delta p$ zeitlich nacheinander in die Vergleichereinheit 101 übertragen, in der jeweils die Differenz zwischen den N Referenzelementen der Referenzfolge 105 und der Folge der gemessenen Momentanperiodendauer-Abweichungen erfolgt.

Bei dem in 101 dargestellten Block erfolgt der Vergleich mit Hilfe einer Aneinanderreihung von N Subtraktionsstufen 66 mit jeweils nachfolgendem Ergebnisregister 64, wobei die bei diesem Subtraktionsverfahren benutzte Referenzfolge 105 , beispielsweise durch Ableitung aus der Folge von Periodendauern eines für diese Übertragungssituation exemplarischen Empfangssignals gebildet werden kann.

Vorteilhaft bei dieser Art des Vergleichens ist, dass bedingt durch die Bandbegrenzung des erwarteten Empfangssignals bei der Differenzbildung keine großen Werteunterschiede auftreten, wodurch die Register nur eine geringe Speichertiefe benötigen und die Differenzbildung durch eine oder wenige Dekrementier- bzw. Inkrementier-Stufen, d.h. z.B. durch Herunterzählen oder Hochzählen der Werte, jeweils nachfolgenden Ergebnisregister, realisiert werden kann. Aufwändige Subtraktionswerke können entfallen.

Nach einem Ausführen einer Anzahl N an Takten durch die Schaltung 62 steht an den N Ausgängen $\Delta pK(N)$ bis $\Delta pK(1)$ der Register 64 jeweils die Differenz von N gemessen Momentanperiodendauer-Abweichungen gegenüber der N-stufigen Referenzfolge bereit, die auch als Folge normierter Periodendauer-Abweichungen bezeichnet wird. Der Mittelwert aus der Abweichungsfolge, der mittels der Additionsstufe 68 und dem mit dem Faktor 1/N arbeitenden Proportionalglied 70 gebildet wird, ergibt die rohe mittlere Periodendauer-Abweichung $\Delta pr$.

Zum Berechnen der Streuungen der normierten Periodendauer-Abweichungen $\Delta pK(N)$ bis $\Delta pK(1)$ wird der Mittelwert $\Delta pM$ von jeder normierten Periodendauer-Abweichungen $\Delta pK(N)$ bis $\Delta pK(1)$ abgezogen. Dies geschieht über eine Anzahl N von Rechenwerken 72. Die mittels der Rechenwerte 72 berechneten Differenzen $D(N)$ bis $D(1)$ werden anschließend an jeweils eine Recheneinheit 74 bereitgestellt, welche dazu ausgelegt ist, die jeweilige bereitgestellte Differenz $D(N)$ bis $D(1)$ zu quadrieren. Dies ergibt eine Anzahl N von Streuungen $\sigma(N)$ bis $\sigma(1)$.

In der Einheit zur Bewertung der Schätzgüte 103 wird für jedes Element $\Delta pK(...)$ geprüft, wie stark er vom Mittelwert $\Delta pr$ abweicht. Bei dem in Fig. 4 gezeigten Beispiel wird dazu je Taktschritt ein N-elementiger Abweichungsvektor $\varepsilon$ in 76 bestimmt, der angibt, wie sehr jedes der Elemente $\Delta pK(...)$ von dem je Taktzyklus gebildeten Mittelwert $\Delta pr$ abweicht. Durch die Differenzbildung mit 72 und einer anschließenden Bewertungskurve 74 wird jede dieser Abweichung bestimmt. Bevorzugt entspricht diese Bewertungskurve dem Betrag aus dem Quadrat der zuvor in 72 berechneten Abweichung von $\Delta pK(...)$ gegenüber $\Delta pr$. Alternativ zur Quadratfunktion kann jedoch auch der Betrag oder eine andere Funktion als Maß für die Größe der Abweichung verwendet werden.

In der in Fig. 4 gezeigten Recheneinheit 107 zur Bestimmung der rohen mittleren Abweichungsgüte $\sigma$ wird je Taktschritt die Summe über alle Elemente des jeweiligen Abweichungsvektors $\varepsilon$ gebildet und der nachfolgenden Einheit 108 bereit gestellt. Aus der Anzahl N von Abweichungen $\varepsilon(N)$ bis $\varepsilon(1)$ kann von einer Auswerteeinheit 76 je Taktzyklus eine Folge $\varepsilon$ mit einer Anzahl von N Werten erstellt werden. Die Folge kann anschließend mit mindestens einer Vergleichs-Folge verglichen werden.

Es wird noch einmal darauf hingewiesen, dass die anhand der Fig. 4 beschriebene Schaltung ist dazu ausgelegt sein kann, eine Schätzgüte, d.h. ein Maß für die Streuung, zu bestimmen. Mithilfe der Schätzgüte kann eine Gültigkeitsentscheidung getroffen werden, ob die normierten Periodendauer-Abweichungen $\Delta pK(N)$ bis $\Delta pK(1)$ weiter bearbeitet und ausgewertet werden. Einzelne normierte Periodendauer-Abweichungen $\Delta pK(N)$ bis $\Delta pK(1)$, welche zu sehr streuen, können herausgefiltert und in einem Fehlerspeicher festgehalten werden. Auf diese Weise können einzelne Fehlmessungen erkannt werden. Die über das Filtern als gültig festgelegten restlichen normierten Periodendauer-Abweichungen $\Delta pK(N)$ bis $\Delta pK(1)$ können anschließend zum Berechnen einer optimierten mittleren Periodendauer-Abweichung, welche eine ausreichende Schätzgüte aufweist, verwendet werden.

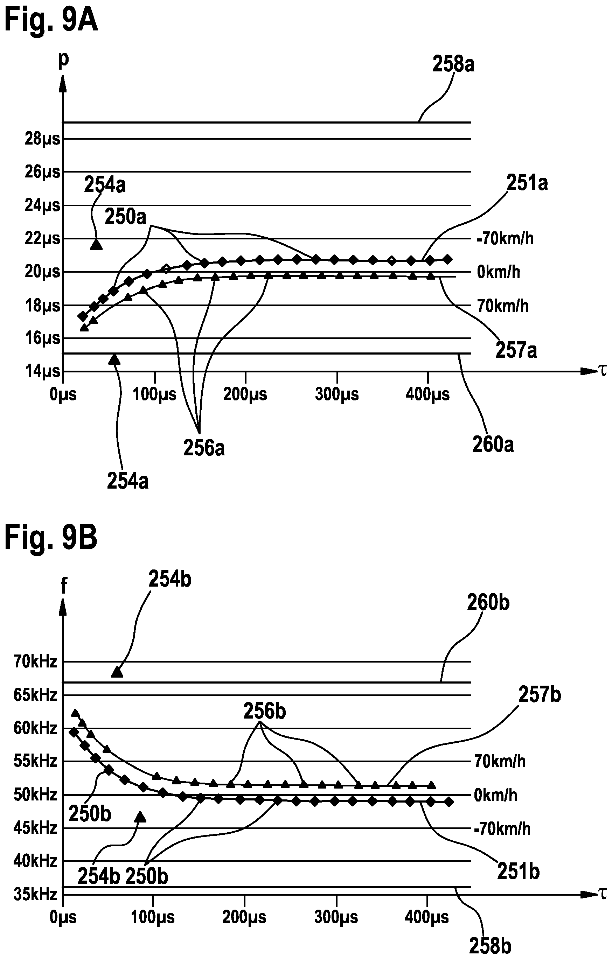

Möglich ist jedoch auch eine Gütebewertung der Messwerte jedes Takt Zyklus anhand der Analyse des Fehlervektors $\varepsilon$. Gibt es bei den Elementen des Abweichungsvektors ähnlich wie bei dem in Fig. 9 beschriebenen Momentanperiodendauern singuläre Ausreißer der bei einem Vergleich berücksichtigten Paarungen von Momentanperiodendauer-Abweichung und entsprechender Referenzperiodendauer-Abweichung, repräsentiert in den Werten $\Delta pK(...)$, so werden diese Paarungen als "ungültig" erklärt werden, damit sie bei der Bestimmung der endgültigen mittleren Periodendauer-Abweichung Δpr nicht mehr berücksichtigt werden, was auch zu einer Verringerung des in dieser Stufe anhand der korrigierten Werte neu berechneten mittleren Abweichungsmaßes σ führt. Denkbar ist auch, dass der in einem Taktzyklus bereitgestellte Satz von Werten als ungültig erklärt wird, wenn die Zahl der in dem entsprechenden Abweichungsvektor ε als Ausreißer detektierten Elemente zu groß ist.

Möglich ist auch, dass die in Fig. 4 beschriebene Schaltung nach dem anhand von Fig. 3 beschriebenen Prinzip auf mehrere Referenzfolgen und/oder für die Verarbeitung von mehreren, durch zeitversetzt arbeitende Messeinrichtungen 61 gewonnenen Werten erweitert wird.

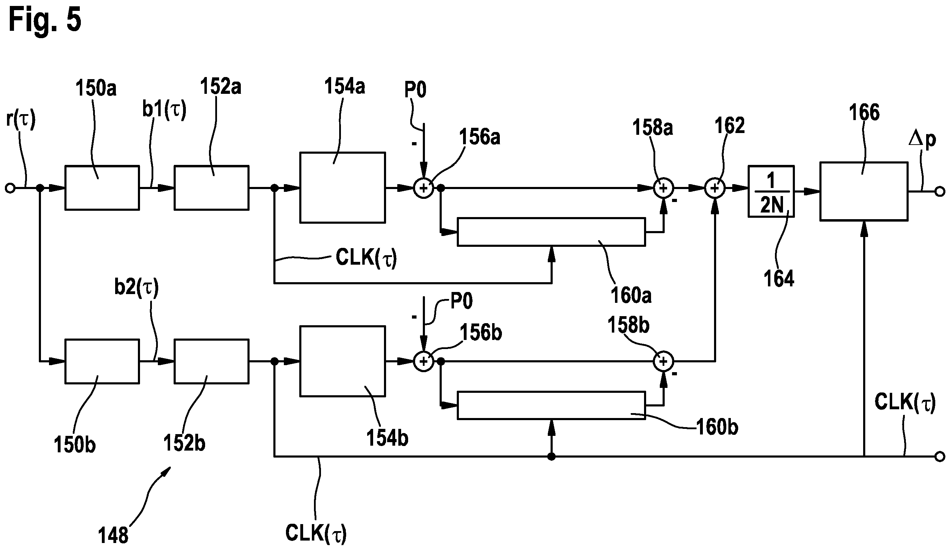

Fig. 5 zeigt ein Blockdiagramm zum Darstellen einer Schaltungsvorrichtung einer vierten Ausführungsform der Ultraschall-Messvorrichtung.

Die anhand der Fig. 5 erläuterte Schaltungsvorrichtung 148 ist besonders gut dazu geeignet, eine mittlere Periodendauer-Abweichung zu ermitteln. Dabei ist es vorteilhaft, wenn eine Sendeeinrichtung der Ultraschall-Messvorrichtung ein Sendesignal mit einer nahezu konstanten Signalfrequenz (d.h. mit einer nahezu konstanten Periodendauer P0) aussendet. Auf diese Weise ist ein Vergleicher kompensierbar.

Ein analoges Empfangssignal r(T) wird an einem ersten und an einem zweiten Auswertepfad bereitgestellt. Dabei weist der erste Auswertepfad einen LH-Komparator 150a und der zweite Auswertepfad einen HL-Komparator 150b an seinem Anfang auf. Jeder der beiden Komparatoren 150a und 150b ist dazu ausgelegt, das analoge Empfangssignal r(T) in ein Binärsignal b1(T) oder b2(T) umzuwandeln. Mindestens einer der Komparatoren 150a und/oder 150b kann dabei die Funktion eines Schwellwertschalters mit einer zeitvariablen Bedeutsamkeitsschwelle erfüllen. Optional können den Komparatoren 150a und/oder 150b Glättungseinheiten 152a und/oder 152b zum Glätten der Binärsignale b1(T) und b2(T) nachgeschaltet sein. Die anhand der Fig. 5 beschriebene Vorgehensweise zum Auswerten des Empfangssignals r(T) kann jedoch auch ohne eine Glättung der Binärsignale b1(T) und b2(T) erfolgen.

Eine Bereitstellung eines Taktsignal CLK(T) kann über das geglättete (entprellte) Binärsignal b1(T) oder b2(T) erfolgen. Arbeitet die Periodendauermesseinrichtung 154a oder 154b beispielsweise über eine Periodendauer, so ist das Taktsignal CLK(T) vorzugsweise gleich dem geglätteten Binärsignal b1(T) oder b2(T). Sofern die Periodendauermesseinrichtung 154a oder 154b über Nm Perioden mittelt, so kann das Taktsignal CLK(T) entsprechend durch eine Teilung durch Nm runtergetaktet werden.

Das geglättete oder nicht geglättete Binärsignal b1(T) wird an eine Periodendauermesseinrichtung 154a bereitgestellt. Die Periodendauermessung kann über mehrere Perioden und/oder nur bei einer Nulldurchgangsrichtung erfolgen. Vorzugsweise ist die Periodendauermesseinrichtung 154a dazu ausgelegt, anhand des Binärsignals b1(T) zeitdiskrete 8 Bit-Periodendauerwerte für eine positive Periodendauer (Momentanperiodendauer) zu ermitteln.

Der Periodendauermesseinrichtung 154a ist ein Rechenwerk 156a nachgeschaltet. Mittels des Rechenwerks 156a können die von der Periodendauermesseinrichtung 154a bestimmten Werte für eine positive Periodendauer in Periodendauer-Abweichungen (Momentanperiodendauer-Abweichungen) umgewandelt werden. Dazu wird von einer Periodendauer eine Konstante, beispielsweise die (mittlere) Periodendauer P0 des Sendesignals, abgezogen.

Auch der zweite Auswertepfad kann eine Periodendauermesseinrichtung 154b und ein Rechenwerk 156b aufweisen. Die Periodendauermesseinrichtung 154b des zweiten Auswertepfads ist beispielsweise dazu ausgelegt, anhand des geglätteten oder nicht geglätteten Binärsignals b2(T) zeitdiskrete 8 Bit-Periodendauerwerte für eine negative Periodendauer zu bestimmen. Anschließend wird mittels des Rechenwerks die Periodendauer P0 des Sendesignals von den ermittelten Werten der Periodendauer abgezogen, um jeweils einen Wert für eine negative Periodendauer (Momentanperiodendauer) zu bilden.

Die mittels der Periodendauermesseinheit 154a und dem Rechenwerk 156a berechneten positiven Periodendauer-Abweichungen werden sowohl an ein Rechenwerk 158a als auch an ein N-faches (Delay)-Schieberegister 160a ausgegeben. Das Schieberegister 160a wird von dem Taktsignal CLK(T) getaktet. Ein Ausgang des Schieberegisters 160a ist an einen Minuseingang des Rechenwerks 158a angekoppelt. Somit werden die ermittelten positiven Periodendauer-Abweichungen durch das Rechenwerk 158a zusammen addiert, wobei jeweils die N-letzte Periodendauer-Abweichung abgezogen wird. Der von dem Rechenwerk 158a ausgegebene Wert entspricht damit einer Summe von den N-letzten ermittelten positiven Periodendauer-Abweichungen. Der von dem Rechenwerk 158a ausgegebene Wert wird an ein Rechenwerk 162 weitergeleitet.

Auch der zweite Auswertepfad weist ein von dem Taktsignal CLK(T) getaktetes N-faches (Delay)-Schieberegister 160b auf, welches ausgangsseitig an einen Minus-Eingang eines Rechenwerks 156b angeschlossen ist. Zusätzlich ist der Ausgang des Rechenwerks 156b an einen Plus-Eingang des Rechenwerks 158b angekoppelt. Der von dem Rechenwerk 158b ausgegebene Wert entspricht damit einer Summe der N-letzten ermittelten negativen Periodendauer-Abweichungen. Auch der Ausgang des Rechenwerks 158b ist an das Rechenwerk 162 angeschlossen.

Das Rechenwerk 162 addiert die von den Rechenwerken 158a und 158b bereitgestellten Summen, um einen Mittelwert sowohl der in den negativen als auch der in den positiven Periodendauer-Abweichungen enthaltenen Informationen zu bestimmen. Ausgangsseitig ist das Rechenwerk 162 an einen Teiler 164 angeschlossen, welcher die von dem Rechenwerk 162 berechnete Summe durch den Wert 2N teilt. Die mittels des Teilers 164 ausgeführte Division ist besonders vorteilhaft, sofern der Wert N gleich $2^a$ ist, wobei a eine natürliche Zahl ist. Allerdings ist das anhand der Fig. 5 erläuterte Auswerteverfahren auch für andere Werte N durchführbar.

Der von dem Teiler 164 berechnete Wert kann anschließend an einen Ausgangsspeicher 166 ausgegeben werden. Auch der Ausgangsspeicher 166 kann mittels des Taktsignals CLK(T) getaktet werden. Vorzugsweise wird die über N-Perioden gemittelte Periodendauer-Abweichung nur bei einer ausreichenden Messgüte in eine nachfolgende Verarbeitungseinheit übernommen. Das Bestimmen der Messgüte und/oder die weitere Verarbeitung und Auswertung der in dem Ausgangsspeicher 166 abgespeicherten über N-Perioden gemittelten Periodendauer-Abweichung kann analog zu den oben schon beschriebenen Beispielen ausgeführt werden, wenn beispielsweise die in den Schieberegistern 160 gespeicherten Werte bezüglich ihrer Wertestreuung analysiert werden. Es wird hier deshalb nicht darauf eingegangen.

In einer Weiterbildung der Schaltungsvorrichtung 148 können mehrere Schätzer mit unterschiedlichen N für eine Objektklassifizierung bzw. für eine Kaskadierung der Ergebnisse verwendet werden.

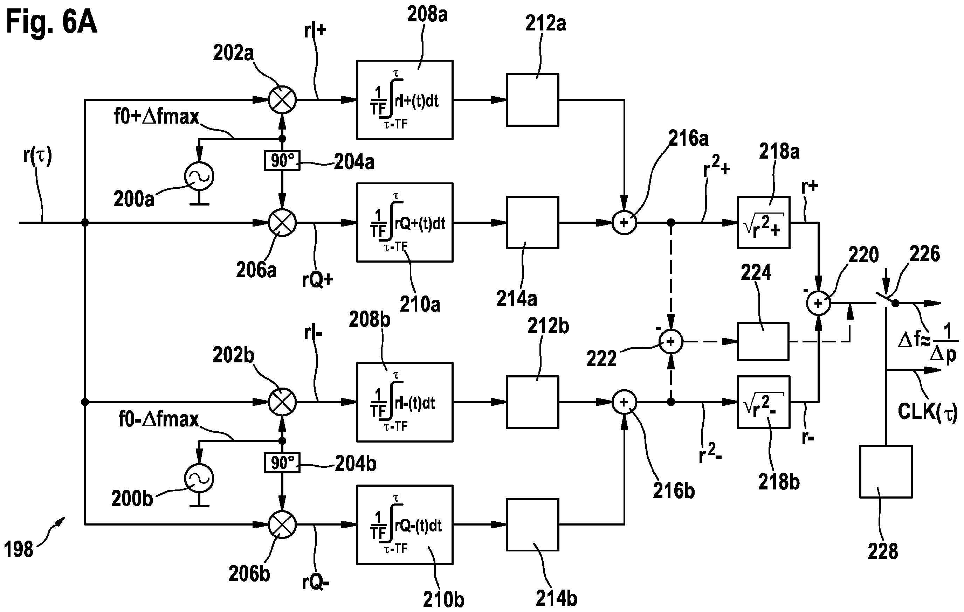

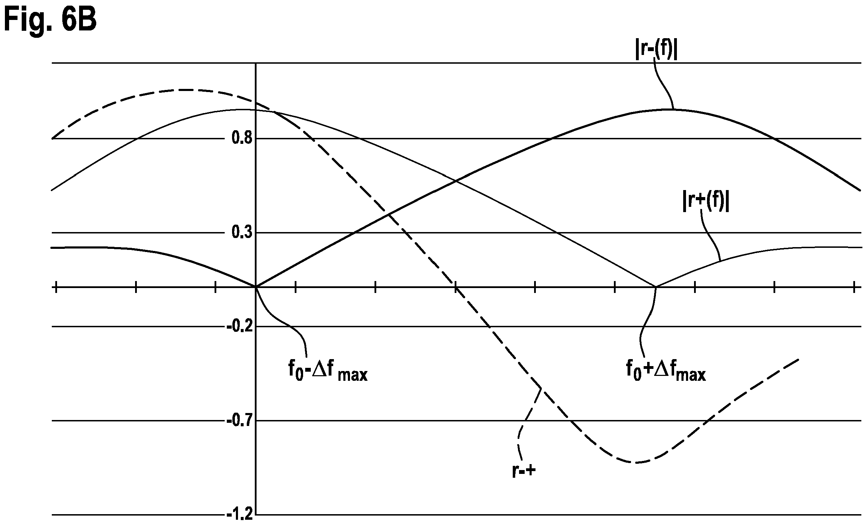

Fig. 6A und 6B zeigen ein Blockschaltbild und ein Koordinatensystem zum Darstellen einer Schaltungsvorrichtung einer vierten Ausführungsform der Ultraschall-Messvorrichtung, wobei Fig. 6A die Schaltungsvorrichtung und Fig. 6B einen von der Schaltungsvorrichtung ausgeführten Rechenschritt darstellen.

Die anhand der Fig. 6A schematisch dargestellte Schaltungsvorrichtung 198 ist als FM-Demodulator zur Detektion einer Signalfrequenz eines dominanten Trägersignals innerhalb eines Bereichs zwischen einer unteren Frequenz f0 - Δfmax und einer oberen Frequenz f0 + Δfmax ausgelegt. Dabei zeigt Fig. 6A insbesondere die Schaltungsarchitektur eines Frequenz-Spannungs-Wandlers. Es wird sowohl ein Spektralanteil des Empfangssignals r(T) mit einer generierten Frequenz $f_0$ + Δfmax als auch ein Spektralanteil des Empfangssignals r(T) mit einer weiteren generierten Frequenz f0 - Δfmax bestimmt. Anschließend wird die Differenz der Beträge der beiden Spektralanteile als Maß für die Periodendauer-Abweichung bzw. für die Frequenzabweichung gebildet.

An dem Signaleingang der Schaltungsvorrichtung 198 wird ein Empfangssignal r(T) bereitgestellt. Das Empfangssignal r(T) soll mittels der Schaltungsvorrichtung 198 hinsichtlich seiner Frequenzen untersucht werden.

Die Schaltung umfasst einen ersten und einen zweiten Referenzgenerator 200a und 200b. Der erste Referenzgenerator 200a ist dazu ausgelegt, ein Signal mit einer Frequenz $f_0$ + Δfmax zu generieren und an seinem Signalausgang bereitzustellen. Der zweite Referenzgenerator 200b ist demgegenüber dazu ausgelegt, an seinem Ausgang ein Signal mit einer Frequenz $f_0$ - Δfmax auszugeben. Der Wert 2Δfmax gibt damit die Bandbreite des Wertebereichs wieder, innerhalb welchen eine relevante Frequenz des Empfangssignals r(T) ermittelt werden soll. Vorzugsweise ist die Frequenz f0 die mittlere Frequenz mit welcher das Sendesignal ausgegeben wird. Insbesondere kann es sich bei dem Sendesignal um ein Signal mit einer nahezu konstanten Frequenz f0 handeln.

Das von dem Referenzgenerator 200a generierte Signal $f_0$ + Δfmax wird mittels eines Mischers 202a mit dem Empfangssignal r(T) gemischt. Das dabei erzeugte Signal wird im Weiteren als Signal rI+ bezeichnet. Zusätzlich wird das Signal mit der Frequenz $f_0$ + Δfmax an einen Phasendreher 204a ausgegeben und um 90° gedreht. Anschließend wird das gedrehte Signal mittels eines Mischers 206a mit dem Empfangssignal r(T) zu einem Signal rQ+ gemischt.

Entsprechend wird auch das von dem Referenzgenerator 200b erzeugte Signal mit der Frequenz $f_0$ - Δfmax mittels eines Mischers 202b mit dem Empfangssignal r(T) zu einem Signal rI- gemischt. Ebenso wird das Signal mit der Frequenz $f_0$ - Δfmax an einen Phasendreher 204b ausgegeben und von diesem um 90° gedreht. Das gedrehte Signal kann mittels des Mischers 206b mit dem Empfangssignal r(T) gemischt werden. Auf diese Weise erzeugt man das Signal rQ-.

Die Signale rI+, rQ+, rI- und rQ- werden jeweils an einen Tiefpassfilter 208a, 210a, 208b oder 210b ausgegeben. Die Formeln zum Filtern der Signale lauten:

$$(\text{Tiefpassfilter } 208a) \quad \frac{1}{TF} \int_{\tau-TF}^{\tau} rI+(t)dt$$

$$(\text{Tiefpassfilter } 210a) \quad \frac{1}{TF} \int_{\tau-TF}^{\tau} rQ+(t)dt$$

$$(\text{Tiefpassfilter } 208b) \quad \frac{1}{TF} \int_{\tau-TF}^{\tau} rI-(t)dt$$

$$(\text{Tiefpassfilter } 210b) \quad \frac{1}{TF} \int_{\tau-TF}^{\tau} rQ-(t)dt$$

Dabei ist TF bevorzugt der Kehrwert von 2Δfmax, d.h. es gilt:

$$TF = \frac{1}{2 \cdot \Delta f \max}$$

Die gefilterten Signale rI+, rQ+, rI- und rQ- werden jeweils an einen Quadrierer 212a, 214a, 212b und 214b ausgegeben. Die Signale der Quadrierer 212a und 214a werden anschließend mittels eines Addierers 216a addiert. Entsprechend werden auch die Signale der Quadrierer 212b und 214b mittels eines Addierers 216b addiert. Dabei erhält man die Signale $r^2+$ und $r^2-$. Eine Darstellung der Übertragungsfunktionen $|r_+(f)|$ und $|r_-(f)|$ sowie deren Differenz $r_{+-}$ ist in Fig. 6B gezeigt.

Das Signal $r^2+$ wird anschließend an eine Wurzelbestimmungs-Einheit 218a ausgegeben. Auch das Signal $r^2-$ wird an eine Wurzelbestimmungs-Einheit 218b bereitgestellt. Mittels eines Addierers 220 wird das von der Wurzelbestimmungs-Einheit 218a bereitgestellte Signal anschließend von dem von der Wurzelbestimmungs-Einheit 218b bereitgestellten Signal abgezogen.

Das am Ausgang des Addierers 220 bereitgestellte Signal ist näherungsweise proportional zu einer Periodendauer-Abweichung (bzw. zu einem Kehrwert einer Frequenz-Abweichung). Somit kann anhand des Signals des Addieres 220 über eine Abtasteinrichtung 226 und einen Taktgenerator 228 auf einfache Weise bestimmt werden, um welchen Wert die momentane Frequenz des Empfangssignals $r(T)$ von der Frequenz $f0$ abweicht.

Optional können die Signale $r^2+$ und $r^2-$ auch vereinfacht mittels eines Addierers 222 so gemischt werden, dass das Signal $r^2+$ von dem Signal $r^2-$ abgezogen wird. Anschließend kann über eine Faktorbildungseinheit 224, die Abtasteinrichtung 226 und den Taktgenerator 228 ein Signal erzeugt werden, welches annähernd proportional zu einer Frequenz-Abweichung ist.

Trotz des relativ hohen Rechenaufwands der Schaltungsvorrichtung 198 weist diese den Vorteil auf, dass durch mehrere Abtastungen innerhalb einer Periode die gesamte Kurveninformation berücksichtigt wird. Dies gewährleistet eine gute Rauschunterdrückung.

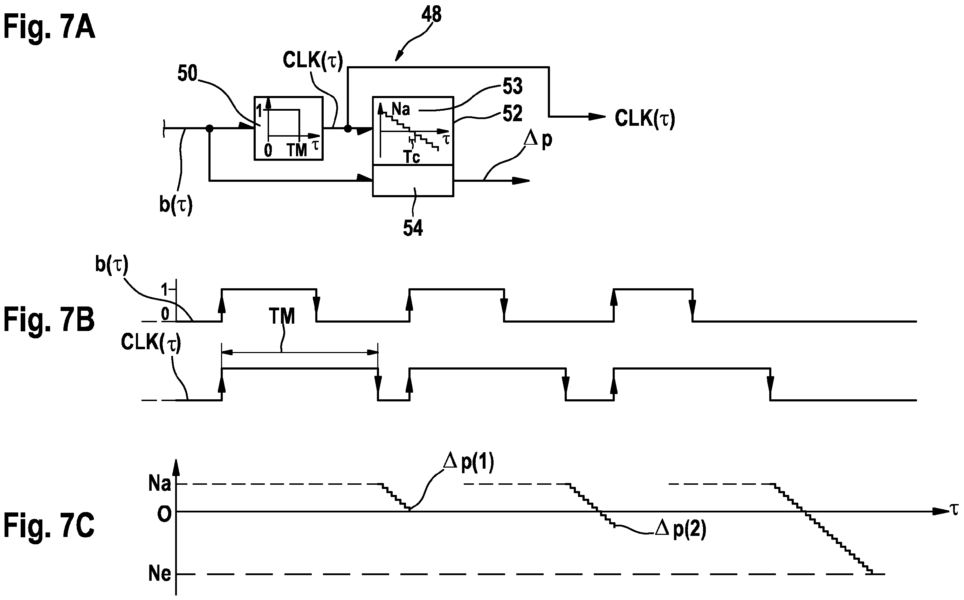

Fig. 7A bis 7C zeigen ein Blockdiagramm und zwei Koordinatensysteme zum Darstellen einer Schaltungsvorrichtung einer fünften Ausführungsform der Ultraschall-Messvorrichtung.

Weiter oben ist bereits beschrieben, wie das Empfangssignal $r(T)$ in ein Binärsignal $b(T)$ umgewandelt wird. Das Binärsignal $b(T)$ kann auch als ein 1-0-Signal (10-Signal) bezeichnet werden, da es für eine positive Phase des Empfangssignals $r(T)$ einen ersten Wert und für eine negative Phase des Empfangssignals $r(T)$ einen zweiten Wert aufweist. Der erste und der zweite Wert sind dabei die Werte "1" und "0" (siehe Fig. 7B mit der Zeitachse T als Abszisse).

Das Binärsignal $b(T)$ wird einer Monoflop-Einheit 50 zugeführt. Die Monoflop-Einheit 50 ist so ausgelegt, dass sie bei jeder erkannten ansteigenden Flanke von 0 auf 1 des Binärsignals $b(T)$ einen Puls eines Taktsignals $CLK(T)$ (als Pulssignal) mit einer Pulsdauer TM startet. Das von der Monoflop-Einheit 50 erzeugte Taktsignal $CLK(T)$ ist in Fig. 7B ebenfalls dargestellt.

Das Taktsignal $CLK(T)$ wird zusammen mit dem Binärsignal $b(T)$ einer Preset-Timer-Capture-Einheit (PTC-Einheit) 52 zugeführt. Die PTC-Einheit 52 besteht aus einem Timer 53, dessen mit dem Wert Na voreingestellter Zählerwert ab einer fallenden Flanke des Taktsignals $CLK(T)$ mit der Taktzeit Tc herunter gezählt wird, bis der Zählerwert Ne erreicht ist, sowie einem Capture-Register 54, das bei steigender Flanke eines Binärsignals $b(T)$ den aktuellen Zählerwert des Timers 53 übernimmt

Die Funktionsweise der Delay-Capture-Architektur 48, d.h. der miteinander verschalteten Komponenten 50 bis 54 kann anhand des Koordinatensystems der Fig. 7B und 7C nachvollzogen werden. Dabei gibt die Abszisse des Koordinatensystems die Zeitachse T an.

Nach einem Pegelwechsel des Binärsignals $b(T)$ wird eine Messung damit begonnen, dass für eine Delay-Zeitdauer (Pulsdauer TM) nicht auf weitere Pegelwechsel des Binärsignals $b(T)$ reagiert wird. Das damit erreichte Entprellen wirkt wie ein Tiefpassfilter. Die Delay-Zeitdauer kann dabei relativ lang festgelegt werden. Nach Ablauf der Delay-Zeitdauer wird unmittelbar der Zähler der PTC-Einheit 52 gestartet, der vorzugsweise mit einem Wert Na der bevorzugt der Anzahl der unterschiedlichen Geschwindigkeit-Betragswerte entspricht, beladen, und die Taktfrequenz wird bevorzugt so reglementiert, dass der Zähler den Wert 0 enthält, wenn seit dem Starten der Delay-Zeitdauer TM des Monoflops genau die Bezugsperiodendauer abgelaufen ist. Bei einer solchen Auslegung entspricht jeder Wert der Periodendauer-Abweichung unmittelbar einem Geschwindigkeitswert, ohne dass eine weitere Umrechnung erforderlich wäre. Mit der ansteigenden Flanke wird der aktuelle Zählerwert des Timers als Maß in das Capture-Register 54 übernommen.

In Fig. 7C sind drei Beispiele $\Delta p(1)$ und $\Delta p(2)$ für die von der PTC-Einheit 52 ermittelten Periodendauer-Abweichungen $\Delta p$ (Momentanperiodendauer-Abweichungen) dargestellt. Im ersten Fall beträgt die zu messende Periodendauer genau der Bezugsperiodendauer, deshalb gilt $\Delta p(1) = 0$. Im zweiten Fall ist die zu messende Periodendauer größer als die Bezugsperiodendauer, deswegen ergibt sich mit der hier dargestellten Schaltungsvorrichtung $\Delta p(2) > 0$.

Erreicht der Zähler einen vorgegebenen End-Zählwert Ne ohne zuvor aufgrund einer erkannten ansteigenden Flanke des Binärsignals $b(T)$ gestoppt zu werden, so wird der Zählvorgang abgebrochen, indem der Wert für die Periodendauer-Abweichung $\Delta p$ auf "ungültig" gesetzt wird. Somit erfolgt bereits beim Ermitteln der Periodendauer-Abweichungen $\Delta p$ ein Herausfiltern von unwahrscheinlichen Werten (s. letztes Beispiel der Fig. 7C).

Der aktuelle Zählerwert des Zählers wird als Maß für die Periodendauer-Abweichung $\Delta p$ in dem Moment ausgelesen, in welchem der nächste steigende Pegelwechsel des Binärsignals $b(T)$ erkannt wird, wobei dieser Zeitpunkt gleichzeitig ein neuer Startpunkt für den Beginn der nachfolgenden Messung der Periodendauer-Abweichung $\Delta p$ durch Triggern des Monoflops 50 ist.

Die anhand der Fig. 7A bis 7C erläuterte Schaltung kann sowohl für ein Ermitteln von positiven Periodendauer-Abweichungen als auch für ein Ermitteln von negativen Periodendauer-Abweichungen ausgelegt sein. Sie kann auch mit einer anderen Zählrichtung des Timers und/oder anderen Vorzeichen der Zählerwerte oder Steuersignale ausgelegt sein.

Je größer die Pulsdauer TM ist, desto größer darf bei gleichbleibender Anforderung die Taktzeit Tc sein. Die Anforderungen werden z.B. durch die unterscheidbaren Werte der Relativgeschwindigkeiten festgelegt.

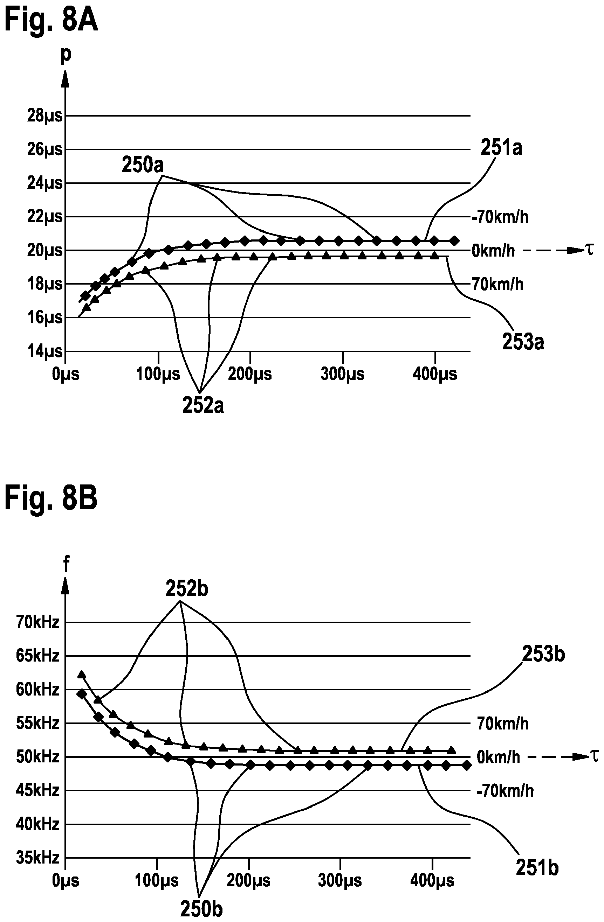

Fig. 8A und B zeigen zwei Koordinatensysteme zum Darstellen eines ersten Anwendungsbeispiels einer Ausführungsform der Ultraschall-Messvorrichtung, wobei Fig. 8A eine Auswertung einer Momentanperiodendauer und Fig. 8B eine Auswertung einer Momentanfrequenz darstellen.

Die Abszissen der Koordinatensysteme der Fig. 8A und B sind die Zeitachse T. Die linksseitig gezeichnete Ordinate des Koordinatensystems der Fig. 8A gibt eine Momentanperiodendauer p(T) an. Demgegenüber entspricht die linksseitig gezeichnete Ordinate des Koordinatensystems der Fig. 8B einer Momentanfrequenz f(T). Die Ordinaten auf der rechten Seite geben jeweils beispielhaft an, bei welcher Relativgeschwindigkeit sich eine Frequenzverschiebung von ca. 5 kHz bzw. eine äquivalente Periodendaueränderung von da. 2$\mu$s eines Signalsimpulses mit einer Signalfrequenz von ca. 50 kHz entsprechend einer Periodendauer von da. 20$\mu$s ergeben würde.

In die Koordinatensysteme sind die Momentanperiodendauern 250a eines von der jeweiligen Ultraschall-Messvorrichtung ausgesendeten Sendesignals (Fig. 8A) und die entsprechenden Momentanfrequenzen 250b des Sendesignals (Fig. 8B) eingetragen. Anhand der Momentanperiodendauern 250a und der Momentanfrequenzen 250b lassen sich jeweils die Graphen 251a und 251b darstellen. Dabei fällt auf, dass die Abweichungen der Momentanperiodendauern 250a von einer (nicht dargestellten) mittleren Periodendauer und die Abweichungen der Momentanfrequenzen 250b von einer (nicht dargestellten) mittleren Frequenz vergleichsweise groß sind, wenn die Intrapulsanalyse Signaländerungen infolge einer Relativbewegung von wenigen km/h detektiert. Beispielsweise ist der Periodendauer-Unterschied innerhalb des Sendesignals wesentlich stärker als die kleinste Auflösung der gesuchten Information, die beispielsweise die Periodendauer-Abweichung des Echos in Folge der Relativgeschwindigkeit sein kann. Das heißt, dass das Sendesignal gewollt, wie beispielsweise im Falle einer Chirp-Modulation, oder ungewollt, wie beispielsweise aufgrund eines Einschwingens eines Ultraschallsenders, einer Variation unterliegt.

In die Fig. 8A und B sind auch die ermittelten Werte für die Momentanperiodendauern 252a und die Momentanfrequenzen 252b des um eine Übertragungslaufzeit verschobenen (ungestörten) Empfangssignals eingetragen, wie sie beispielsweise bei eine direkten Übertragung zwischen einem Ultraschallsender und einer Empfangseinrichtung auftreten können. Diese Werte lassen sich auf einfache Weise auswerten und als Graphen 253a und 253b darstellen. Dabei ist zu erkennen, dass im Fall der ungestörten Übertragung alle Periodendauern 252a und die Frequenzen 252b auf den Graphen 253a und 253b liegen.

Anhand eines Vergleichs der Graphen 251a und 253a, bzw. eines Vergleichs der Graphen 251b und 253b, lässt sich beispielsweise eine Relativgeschwindigkeit eines reflektierenden Objekts, an welchem das auszuwertende Empfangssignal reflektiert wird, und/oder zwischen Ultraschallsender und Empfangseinrichtung, unter Berücksichtigung der Dopplerverschiebung ermitteln. Bei dem dargestellten Beispiel liegt die Relativgeschwindigkeit bei 8m/s (ca. 30 km/h).

Dabei zeigen die Fig. 8A und B auch, dass der Messfehler unter 2% liegt. Zusätzlich ist gezeigt, bei welcher Relativgeschwindigkeit sich eine Frequenzverschiebung von ca. 5 kHz bzw. eine äquivalente Periodendaueränderung von ca. 2$\mu$s eines Sendeimpulses mit einer Signalfrequenz von ca. 50 kHz entsprechend einer Periodendauer von ca. 20$\mu$s ergibt.

Für ein Ermitteln der Relativbewegung durch Auswerten der Dopplerverschiebung ist es vorteilhaft, wenn eine Signalform des Sendesignals für eine Auswertung als Referenz vorliegt. Die Bestimmung der Relativbewegung kann beispielsweise dadurch erfolgen, dass eine Differenz der ermittelten Momentanperiodendauern 252a und/oder Momentanfrequenzen 252b des Empfangssignals von Referenz-Periodendauern und/oder Referenz-Frequenzen berechnet wird. Eine Folge von Periodendauern des Empfangssignals ist auf diese Weise durch die Differenzbildung auf eine Referenzfolge normierbar. Dies ist beispielsweise oben anhand der Fig. 4 beschrieben.

Unter bestimmten erleichternden Randbedingungen entspricht damit der Mittelwert der Differenzen der zu ermittelnden Relativgeschwindigkeit. Sofern empfängerseitig nach einem Aussenden von variierten Sendesignalformen mit verschiedenen Empfangssignalformen gerechnet wird, kann der Vergleich an verschiedenen Referenzen durchgeführt werden. Dabei können zeitparallel verschiedene Folgen von Referenz-Periodendauern und/oder Referenz-Frequenzen von den ermittelten Momentanperiodendauern 252a und/oder Momentanfrequenzen 252b abgezogen werden. Die Folgen von Referenz-Periodendauern und/oder Referenz-Frequenzen können jeweils einer möglichen Signalform des Sendesignals aus einem Satz verschiedener Signalformen und/oder dem Reflexmuster verschiedener Objektformen entsprechen.

Sofern gewünscht wird, anhand mehrerer Referenzen nach Unterschieden im Intrapulsverlauf der Empfangssignale zu suchen, kann über ein Berechnen eines Mittelwerts, der einzelnen Streuungen und/oder einer mittleren Streuung der normierten Momentanperiodendauern 252a und/oder der normierten Momentanfrequenzen 252b kann bei der Auswertung festgestellt werden, welcher der möglichen Signalformen das ausgesendete Sendesignal entspricht und/oder welche Objektform ein Echo verursacht hat.

Mittels einer Ultraschall-Messvorrichtung, welche dazu ausgelegt ist, mittels einer Intrapulsauswertung eines Empfangssignals festzustellen, welches Sendesignal aus einem Satz möglicher Sendesignale zuvor ausgesandt wurde, können weitere Systemverbesserungen, wie Langläuferunterdrückung und/oder zeitlicher Parallelbetrieb, erreicht werden.

Sinngemäß ergeben sich vergleichbare Anforderungen an eine Ultraschall-Messvorrichtung auch, wenn die großen Unterschiede zwischen den einzelnen ermittelten Momentanperiodendauern 252a und/oder Momentanfrequenzen 252b des Empfangssignals nicht auf einen Sendepulse mit stark variierenden Momentanperiodendauern 250a und/oder Momentanfrequenzen 250b, sondern auf ein bestimmtes Muster von reflektierenden Objektpunkten zurückzuführen sind. Auch in diesem Fall kann über ein quasi gleichzeitiges Normieren der ermittelten Momentanperiodendauern 252a und/oder Momentanfrequenzen 252b des Empfangssignals mit bestimmten Folgen von Vergleichs-Periodendauern und/oder Vergleichs-Frequenzen ein bestimmtes Muster den ermittelten Momentanperiodendauern 252a und/oder Momentanfrequenzen 252b, und damit den reflektierenden Objektpunkten, zugeordnet werden.

Fig. 9A und B zeigen zwei Koordinatensysteme zum Darstellen eines zweiten Anwendungsbeispiels einer Ausführungsform der Ultraschall-Messvorrichtung, wobei Fig. 9A eine Auswertung einer Periodendauer und Fig. 9B eine Auswertung einer Frequenz darstellen. Die Abszissen und Ordinaten der Fig. 9A und B entsprechen denen der Fig. 8A und B.

In die Fig. 9A und B sind die oben schon beschriebenen Momentanperiodendauern 250a und die Momentanfrequenzen 250b des Sendesignals zusammen mit den anhand der Momentanperiodendauern 250a und die Momentanfrequenzen 250b des Sendesignals dargestellten Graphen 251a und 251b eingetragen. Zusätzlich sind die aus einem Empfangssignal ermittelten und um eine Übertragungslaufzeit verschobenen Momentanperiodendauern 256a (Fig. 9A) und die aus dem Empfangssignal ermittelten Momentanfrequenzen 256b (Fig. 9B), welche um die Übertragungslaufzeit verschoben sind, dargestellt.

Die bei einer störungsfreien Übertragung in der Regel nicht auftretenden Extremwerte 254a und 254b, welche außerhalb der von den Grenzkurven 258a und 260a, bzw. 258b und 260b aufgespannten Wertebereiche liegen, können mit den beschriebenen Schaltungen leicht als Extremwerte 254a und 254b erkannt und, beispielsweise mittels geeignet gestalteter Schaltungen zum Messen der Momentanperiodendauer-Abweichung, herausgefiltert werden.

Die über das Herausfiltern gewonnenen Momentanperiodendauern 256a und/oder Momentanfrequenzen 256b lassen sich mit den beschriebenen Verfahren mittels der Grenzkurven 258a und 260a, bzw. 258b und 260b, als "ungültig" herausfiltern und werden bei der endgültigen Berechnung nicht berücksichtigt. Somit tragen die Extremwerte 254a und 254b nicht zu einem Verfälschen des Ergebnisses bei, so dass weiterhin mit einem Messfehler unter 2% feststellbar ist, dass die Relativgeschwindigkeit bei 8m/s (ca. 30 km/h) liegt.

Ebenso können Extremwerte anhand ihrer Streuung gegenüber einem Mittelwert erkannt, als "ungültig" herausgefiltert und somit bei der nachfolgenden Berechnung ohne Berücksichtigung bleiben.

Anstelle der von den Grenzkurven 258a und 260a, bzw. 258b und 260b aufgespannten Wertebereiche können auch Streuungen der auf die jeweilige Referenz normierten Periodendauern 256a und/oder Frequenzen 256b für ein Herausfiltern der Extremwerte 254a und 254b ausgewertet werden.

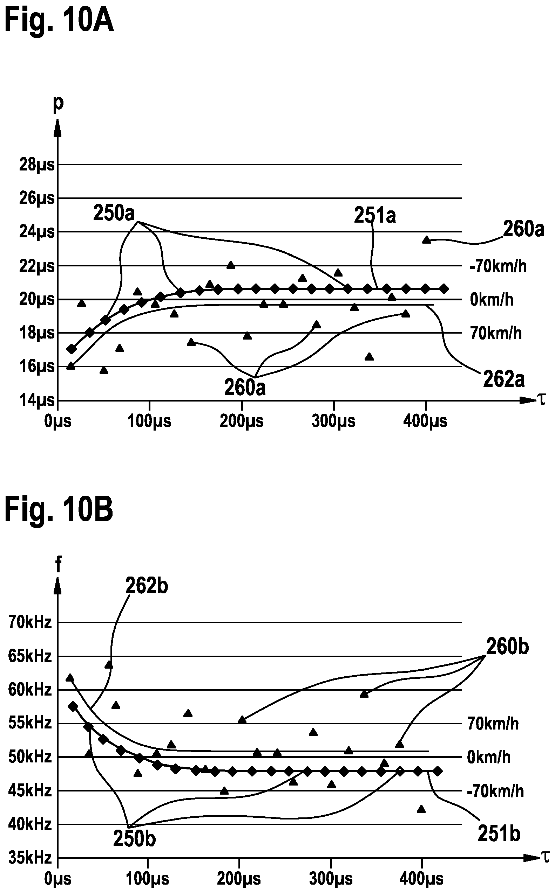

Fig. 10A und B zeigen zwei Koordinatensysteme zum Darstellen eines dritten Anwendungsbeispiels einer Ausführungsform der Ultraschall-Messvorrichtung, wobei Fig. 10A eine Auswertung einer Momentanperiodendauer und Fig. 10B eine Auswertung einer Momentanfrequenz darstellen. Die Abszissen und Ordinaten der Fig. 10A und B entsprechen denen der Fig. 8A und B.

Auch in die Fig. 10A und B sind die oben schon beschriebenen Momentanperiodendauern 250a und die Momentanfrequenzen 250b des Sendesignals zusammen mit den Graphen 251a und 251b eingetragen. Ebenso sind die aus einem Empfangssignal ermittelten und um eine Übertragungslaufzeit verschobenen Momentanperiodendauern 260a in Fig. 9A und die aus dem Empfangssignal ermittelten, ebenfalls um die Übertragungslaufzeit verschobenen Momentanfrequenzen 260b in Fig. 9B dargestellt.

Dabei fällt dem Betrachter der Fig. 10A und B auf, dass die ermittelten Momentanperiodendauern 260a und Momentanfrequenzen 260b des Empfangssignals gegenüber den vorhergehenden Beispielen starke Streuungen aufweisen. Allerdings können diese starken Streuungen der Momentanperiodendauern 260a und Momentanfrequenzen 260b des Empfangssignals durch Berechnen von optimierten Mittelwerten für die Periodendauern 260a und/oder Frequenzen 260b ausgeglichen werden. So lässt sich trotz der vergleichsweise großen Streuungen der Momentanperiodendauern 260a und Momentanfrequenzen 260b des Empfangssignals die Relativgeschwindigkeit von 8m/s (ca. 30 km/h) mit einem Messfehler unter 15% ermitteln.

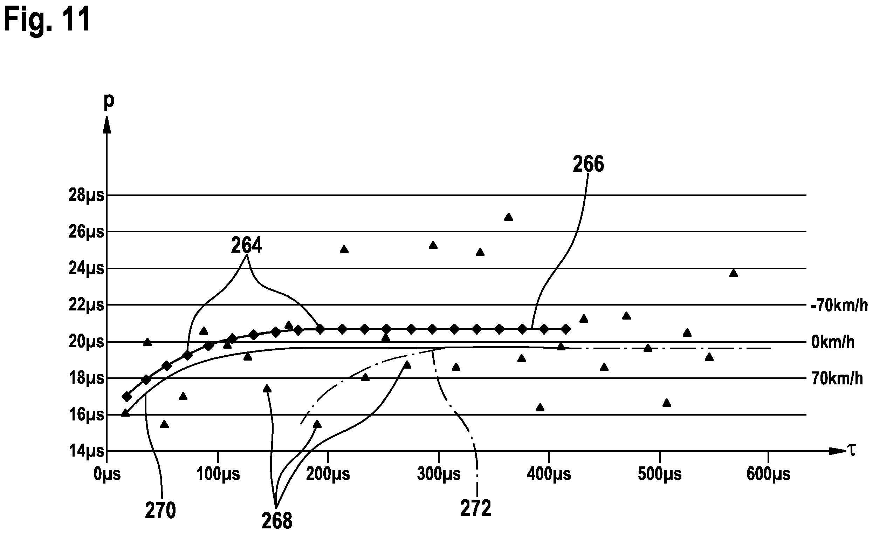

Fig. 11 zeigt ein Koordinatensystem zum Darstellen einer Auswertung einer Momentanperiodendauer bei einem vierten Anwendungsbeispiel einer Ausführungsform der Ultraschall-Messvorrichtung. Dabei ist die Abszissen des Koordinatensystems die Zeitachse T. Die Ordinate des Koordinatensystems gibt eine Periodendauer p an.

Bei dem dargestellten Anwendungsbeispiel wird ein ausgesendetes Sendesignal mit den Momentanperiodendauern 264, welche einem Graphen 266 bilden, an zwei Objektpunkten reflektiert. Die beiden (nicht dargestellten) Objektpunkte liegen gegeneinander um einen Wegstreckenunterschied von ca. 28mm versetzt. Aufgrund des vergleichweise kleinen Wegstreckenunterschieds zwischen den beiden Objekten können Überlagerungen zwischen den Einzelreflexionen der einzelnen Objekte auftreten. Die anhand des Empfangssignals ermittelten und um die Laufzeit verschobenen Momentanperiodendauern 268 weisen deshalb eine relativ große Streuung auf.

Solchen Überlagerungsfällen ist beispielsweise eigen, dass die Pulsdauer des empfangenen Pulses erheblich länger als die des ausgesendeten Pulses ist. Die Momentanperiodendauern 268 eines solchen Empfangssignals werden deshalb bevorzugt mittels eines Auswerteverfahrens, bei welchem nur der Zeitverlauf der Periodendauer am Beginn und am Ende eines Echos berücksichtigt werden, ausgewertet, wobei bevorzugt der Beginn eines Echos durch das erstmalige Überschreiten einer Bedeutsamkeitsschwelle der Signalstärke des Empfangssignals nach einer zuvor längeren Zeit des Unterschreitens und das Ende durch das letztmalige Überschreiten einer Bedeutsamkeitsschwelle der Signalstärke des Empfangssignals vor einer längeren Zeit des Unterschreitens begrenzt werden. Auf diese Weise können die Überlagerungen der Einzelreflexionen als solche erkannt werden. Die verwendete Ultraschall-Messvorrichtung ist dazu ausgelegt, zu erkennen, dass für die ermittelten Periodendauern 268 des Empfangssignals ein Bilden von zwei Graphen 270 und 272 vorteilhaft ist. Zusätzlich kann die Ultraschall-Messvorrichtung den Abstand zwischen den beiden Objekten feststellen.

Des Weiteren kann die Ultraschall-Messvorrichtung anhand der Dopplerverschiebung die Relativgeschwindigkeit der Objekte feststellen. Dabei erkennt die Ultraschall-Messvorrichtung, dass sich beide Objekte mit der gleichen Relativgeschwindigkeit von 8m/s (ca. 30 km/h) bewegen. Der Messfehler liegt dabei unter 12%.

In den oberen Absätzen wurde nur auf die Gewinnung der Periodendauern und/oder Frequenzen mittels der Intrapulsauswertung genauer eingegangen. Die Weiterverarbeitung der anhand der Periodendauern und/oder Frequenzen gewonnenen Basisinformationen, wie beispielsweise einer Relativgeschwindigkeit, einer Objektoberfläche und/oder einer gesendeten Signalform, zu einem Umgebungsszenenbild und/oder zu einem Umgebungsszenenfilm ergibt sich für einen Fachmann auf einfache Weise. Es wird hier deshalb nicht darauf eingegangen.

In einer weiteren Ausführungsform kann eine Fahrzeug-Fahrzeug-Kommunikation ermöglicht werden, die gleichzeitig zur Übertragung von Fahrzeug-Fahrzeug-Bewegungsrelationen geeignet ist.

Hierzu ist vorzugsweise an jeder Fahrzeugecke je eine Antenne angebracht. Die vorderen beiden Antennen FL (Front links) und FR (Front rechts) sind insbesondere vorwiegend in Fahrtrichtung ausgerichtet. Die hinteren beiden Antennen RL (Rear links) und RR (Rear rechts) sind in diesem Fall vorwiegend entgegen der Fahrtrichtung ausgerichtet. Die Bewegungsrelationen des Fahrzeugs können insbesondere mittels Impulsmodulation übertragen werden, wobei die von den Antennen jeweils ausgesendeten Impulse auf unterschiedliche Trägerfrequenzen f(VL), f(VR), f(RL) und f(RR) aufmoduliert sind. Die Relation der Frequenzen (Frequenzdifferenzen) dieses Frequenzsatzes untereinander ist fest, allen Empfängern bekannt und so zu wählen, dass realistische Bewegungen von Fahrzeugen nicht/kaum, z.B. durch eine Dopplerverschiebung, so verschoben werden, dass die Impulse nicht mehr eindeutig einem Sendeort am Fahrzeug zuordbar sind.

Die Mittenfrequenz (bzw. Grund- oder Bezugsfrequenz) dieses Frequenzsatzes ist vorzugsweise proportional zur Geschwindigkeit des Fahrzeuges zu wählen, damit ein Empfänger der Impulse die Geschwindigkeit des sendenden Fahrzeugs erkennen kann. Die zeitliche Breite, d.h. die Impulsdauer der von einem Fahrzeug nach vorn und nach hinten ausgesendeten Impulse, ist bevorzugter Weise proportional der vom Fahrzeug geschätzten Abstände zum vorausfahrenden Fahrzeug, bzw. zum nachfolgenden Fahrzeug. Bei einem großen Abstand wird eine große Pulsdauer und bei einem kleinen Abstand wird eine kleine Pulsdauer ausgesendet. Bevorzugt ist die Impulsdauer von Front und Rear völlig unabhängig voneinander. Darüber hinaus kann auch die Impulsdauer auf der linken und auf der rechten Antenne unterschiedlich sein, wenn das sendende Fahrzeug auf der rechten Seite in Fahrtrichtung einen anderen Hindernisabstand erkennt als auf der linken Seite. Verkehrsteilnehmer, die diese Impulse empfangen, können anhand der Umpulsdauer das vom sendenden Fahrzeug angenommene Szenario erkennen.

Der Basisabstand der Antennen pro Fahrtrichtung sollte bei allen Fahrzeugen möglichst einheitlich sein und bevorzugt zwischen 130 cm und 150 cm liegen.

Das Aussenden der Impulse beginnt bevorzugt für beide Richtungen (Front und Rear) zum gleichen Zeitpunkt. Ein empfangendes Fahrzeug kann auf diese Weise den Basisabstand der Antennen des sendenden Fahrzeugs bestimmen. Alternativ könnte das Aussenden der auf die Trägerfrequenzen aufmodulierten Impulse auch zum gleichen Zeitpunkt enden. Ein Empfänger, welcher auf einer Antenne die aufmodulierten Impulse empfängt, kann in diesem Fall aus einer eventuellen Laufzeitdifferenz der Impulse die räumliche Relation zwischen Empfangsantenne und sendendem Fahrzeug erkennen. Die Bestimmung der Bewegungsrelation wird durch den zeitgleichen Empfang auf einer weiteren Antenne validiert und verfeinert. Eventuelle teilweise Abschattungen zwischen dem Sender und dem Empfänger können so bestimmt werden.

Der zeitliche Abstand zwischen den Impulsen kann neben der in der Kommunikation üblichen Zufallskomponente von der eigenen Geschwindigkeit und/oder von den Relativgeschwindigkeiten zu umgebenden Fahrzeugen abhängen. Bei einer höheren Eigengeschwindigkeit und/oder bei einer hohen Relativgeschwindigkeit zu benachbarten Objekten/Fahrzeugen ist der Impulsabstand in diesem Fall kleiner als bei einem fast stehenden Fahrzeug, das von fast stehenden Fahrzeugen/Objekten umgeben ist. Damit ein Empfänger Signalveränderungen infolge Mehrwege-Ausbreitung besser analysieren kann, kann statt einem zusammenhängenden Impuls auch ein zeitlich eng zusammenhängender Doppelimpuls, bzw. eine zeitlich eng aufeinander folgende Umpulssequenz, ausgesendet werden.

In einer abgewandelten Form der Fahrzeug-Fahrzeug-Kommunikation können die linken und die rechten Impulse der Antennen einer Fahrtrichtung auch eine dem Empfänger bekannte zeitliche Relation zueinander haben. Dies kann im einfachsten Fall die Anforderungen an den Empfänger verringern, da dieser auf weniger Trägerfrequenzen zeitgleich empfangen muss. Ebenso kann eine variable zeitliche Relation der Impulse zueinander oder/und eine variable Relation der Trägerfrequenzen auch zur Informationsübertragung zwischen den Fahrzeugen genutzt werden. Anhand der Amplitude der empfangenen Impulse und deren zeitlicher Relation zueinander kann ein Empfänger den Abstand zwischen dem sendenden Fahrzeug und dem empfangenden Fahrzeug schätzen.

Bei der Verwendung von Ultraschall als Übertragungsmittel kann die langsame Ausbreitungsgeschwindigkeit mit heutigen Mitteln leicht beherrscht werden. Außerdem weisen viele moderne Autos zumindest vier entsprechende Antennen in Form von Ultraschall-Parksensoren an den Außenecken auf. Durch einen Frequenzmultiplex kann eine Signalcodierung durchgeführt werden. Mittels Korrelationsmethoden kann die realisierbare Reichweite zusätzlich erhöht werden. Bei einer geeigneten Auslegung des Systems ist eine derartige Fahrzeug-Fahrzeug-Kommunikation im Freifeld von bis zu 30m möglich. Insbesondere kann dieser Frequenzträgersatz statt fester Frequenzen einen Satz von Frequenz-Chips verwenden. Dies würde vermeiden, dass sich Fahrzeuge mit gleicher Geschwindigkeit gegenseitig stören.

In einer Feinauslegung des vorstehend beschriebenen Systems können das Sendetiming und die Trägerfrequenzen der heute üblichen Antennen mitberücksichtigt werden. Beispielsweise könnte je nach verfügbarer Bandbreite in den Antennen, Sende- und Empfangswegen weitere Antennen auf anderen Trägerfrequenzen zur zusätzlichen Nachrichtenübertragung verwendet werden. Auf diese Weise übertragbare Nachrichten sind beispielsweise Positionen von Festobjekten, Unfällen und/oder weiteren Verkehrsteilnehmern. Natürlich können auch Multimediadaten, Entertainmentdaten und/oder Informationen über Mautgebühren als nicht direkt den Verkehrsfluss betreffende Daten auf diese Weise übertragen werden.

Vereinfachungen sind möglich, indem z.B. in Fahrtrichtung statt zwei nur eine Antenne eingebaut wird. Die Kommunikation von einem vorausfahrenden Fahrzeug zu einem nachfolgenden Fahrzeug ist auch in diesem Fall gut möglich.

Die bei höheren Geschwindigkeiten üblichen Verwehungen von Ultraschallsignalen sind bei einem solchen System unkritisch, da der Schall von dem vorausfahrenden Fahrzeug zu dem nachfolgenden Fahrzeug, d.h., entlang des Informationsfluss-Weges, geweht wird.

Bei dem in den oberen Absätzen beschriebenen Verfahren wird bevorzugt ein Frequenzgemisch mit einem großen Abstand zu der Trägerfrequenz ausgesendet. Dabei ist auch eine Verfeinerung der Messungen in Funk-gestützten Car-to-car-Projekten realisierbar.

Insbesondere ist mittels der in den oberen Absätzen beschriebenen Technologie eine Ortung von Verkehrsteilnehmern untereinander einfach realisierbar.

## Patentansprüche

1.  Ultraschall-Messvorrichtung für ein Fahrzeug (10) mit
    einer Empfangseinrichtung (14), welche dazu ausgelegt ist, ein von einem fahrzeugeigenen Ultraschallsender (13) ausgesendetes und an mindestens einem in einem Übertragungsweg zwischen der Empfangseinrichtung (14) und dem fahrzeugeigenen Ultraschallsender (13) befindlichen reflektierenden Objekt (16a,16b,16c,18) reflektiertes Ultraschallsignal (r(T)) zu empfangen, und eine Messfolge ($\Delta p$, $\Delta p(1)$, $\Delta p(2)$,f,PN1 bis PN6,PP1 bis PP6) bezüglich eines Zeitverlaufs der Periodendauern (PN1 bis PN6, PP1 bis PP6) des empfangenen Ultraschallsignals (r(T)) zu bestimmen und bereitzustellen, wobei die von der Empfangseinrichtung (14) bestimmte Messfolge ($\Delta p$, $\Delta p(1)$, $\Delta p(2)$,f,PN1 bis PN6,PP1 bis PP6) eine Folge von positiven Periodendauern (PP1 bis PP6) des empfangenen Ultraschallsignals (r(T)), eine Folge von negativen Periodendauern (PN1 bis PN6) des empfangenen Ultraschallsignals (r(T)), eine Folge von positiven Periodendauer-Abweichungen ($\Delta p$, $\Delta p(1)$, $\Delta p(2)$) des empfangenen Ultraschallsignals (r(T)) von einer positiven Bezugsperiodendauer (P0) und/oder eine Folge von negative Periodendauer-Abweichungen des empfangenen Ultraschallsignals (r(T)) von einer negativen Bezugsperiodendauer (P0) umfasst; wobei unter einer positiven Periodendauer (PP1 - PP6) ein zeitlicher Abstand zwischen zwei aufeinander folgenden Durchgängen von einem kleineren Wert zu einem größeren Wert des empfangenen Ultraschallsignals (r($\tau$)) bezogen auf einen Bezugswert (SB) und unter einer negativen Periodendauer (PN1 - PN6) der zeitliche Abstand zwischen zwei aufeinander folgenden Durchgängen von einem größeren Wert zu einem kleineren Wert des empfangenen Ultraschallsignals (r($\tau$)) bezogen auf den Bezugswert (SB) zu verstehen ist; einer Vergleichseinrichtung (101), auf welcher eine Folge von positiven Periodendauern (PP1 bis PP6) des ausgesendeten Ultraschallsignals (r(T)), eine Folge von negativen Periodendauern (PN1 bis PN6) des ausgesendeten Ultraschallsignals (r(T)), eine Folge von positiven Periodendauer-Abweichungen ($\Delta$p, $\Delta$p(1), $\Delta$p(2)) des ausgesendeten Ultraschallsignals (r(T)) von einer positiven Bezugsperiodendauer (P0) und/oder eine Folge von negative Periodendauer-Abweichungen des ausgesendeten Ultraschallsignals (r(T)) von einer negativen Bezugsperiodendauer (P0) als mindestens eine Referenzfolge ($\Delta$p0(1) bis $\Delta$p0(N)) hinterlegt ist, und welche dazu ausgelegt ist, die bestimmte Messfolge ($\Delta$p, $\Delta$p(1), $\Delta$p(2),f,PN1 bis PN6,PP1 bis PP6) mit der mindestens einen Referenzfolge ($\Delta$p0(1) bis $\Delta$p0(N)) zu vergleichen und eine Vergleichsinformation ($\Delta$pn(1) bis $\Delta$pn(N)) bezüglich einer Abweichung der bestimmten Messfolge ($\Delta$p, $\Delta$p(1), $\Delta$p(2),f,PN1 bis PN6,PP1 bis PP6) von der mindestens einen Referenzfolge ($\Delta$p0(1) bis $\Delta$p0(N)) zu bestimmen; wobei unter einer positiven Periodendauer (PP1 - PP6) ein zeitlicher Abstand zwischen zwei aufeinander folgenden Durchgängen von einem kleineren Wert zu einem größeren Wert des ausgesendeten Ultraschallsignals (s($\tau$)) bezogen auf einen Bezugswert (SB) und unter einer negativen Periodendauer (PN1 - PN6) der zeitliche Abstand zwischen zwei aufeinander folgenden Durchgängen von einem größeren Wert zu einem kleineren Wert des ausgesendeten Ultraschallsignals (s($\tau$)) bezogen auf den Bezugswert (SB) zu verstehen ist; und einer Auswerteeinrichtung (112), welche dazu ausgelegt ist, unter Berücksichtigung der bestimmten Vergleichsinformation ($\Delta$pn(1) bis $\Delta$pn(N)) eine Information bezüglich einer Relativgeschwindigkeit des mindestens einen reflektierenden Objekts (16a,16b,16c,18) und/oder ein Formmerkmal des mindestens einen reflektierenden Objekts (16a,16b,16c,18) zu bestimmen, wobei durch eine zeitparallele Auswertung von positiven Periodendauern (PP1 bis PP6) und negativen Periodendauern (PN1 bis PN6) und/oder eine zeitparallele Auswertung von positiven Periodendauer-Abweichungen ($\Delta$p, $\Delta$p(1), $\Delta$p(2)) und negative Periodendauer-Abweichungen redundante Auswerteergebnisse zur gegenseitigen Plausibilisierung der Information bestimmt werden

2. Ultraschall-Messvorrichtung nach Anspruch 1, wobei die Empfangseinrichtung (14) einen Schwellwertschalter (60) mit einer vorgegebenen Bedeutsamkeitsschwelle (R(T)) umfasst, welcher dazu ausgelegt ist, das Ultraschallsignal (r(T)) so zu filtern, dass die Messfolge ($\Delta$p, $\Delta$p(1), $\Delta$p(2),f,PN1 bis PN6,PP1 bis PP6) unter Berücksichtigung von Signalbereichen ($\Delta$1 bis $\Delta$6) des Ultraschallsignals (r(T)) mit einer Intensität (I(T)) über der Bedeutsamkeitsschwelle (R(T)) bestimmt wird und Signalbereiche des Ultraschallsignals (r(T)) mit einer Intensität (I(T)) unter der Bedeutsamkeitsschwelle (R(T)) herausgefiltert werden.

3. Ultraschall-Messvorrichtung nach Anspruch 1 oder 2, wobei die Empfangseinrichtung (14) eine Binärsignal-Ausgabeeinrichtung umfasst, welche dazu ausgelegt ist, zumindest Bereiche des empfangenen Ultraschallsignals (r(T)) in ein Binärsignal (b(T), b1(T), b2(T)) umzuwandeln, und wobei die Empfangseinrichtung (14) mindestens eine Zeitmesseinheit (62a, 62b, 154a, 154b) umfasst, welche dazu ausgelegt ist, unter Berücksichtigung des bereitgestellten Binärsignals (b(T), b1(T), b2(T)) die Folge von positiven Periodendauer-Abweichungen ($\Delta$p, $\Delta$p(1), $\Delta$p(2)) und/oder die Folge von negative Periodendauer-Abweichungen von der Bezugsperiodendauer (P0) als Messfolge ($\Delta$p, $\Delta$p(1), $\Delta$p(2),f,PN1 bis PN6,PP1 bis PP6) zu bestimmen.

4. Ultraschall-Messvorrichtung nach Anspruch 3, wobei die Empfangseinrichtung (14) eine erste Zeitmesseinheit (62a,154a) und eine zweite Zeitmesseinheit (62b,154b) umfasst, und wobei die erste Zeitmesseinheit (62a,154a) dazu ausgelegt ist, die positive Periodendauer-Abweichung ($\Delta$p, $\Delta$p(1), $\Delta$p(2)) von der Bezugsperiodendauer (P0) zu ermitteln und die zweite Zeitmesseinheit (62b,154b) dazu ausgelegt ist, die negative Periodendauer-Abweichung von der Bezugsperiodendauer (P0) zu ermitteln.

5. Ultraschall-Messvorrichtung nach einem der vorhergehenden Ansprüche, wobei auf der Vergleichseinrichtung (60) mindestens eine erste Referenzfolge bezüglich eines ersten Vergleich-Formmerkmals des mindestens einen reflektierenden Objekts (16a,16b,16c,18) und eine zweite Referenzfolge bezüglich eines zweiten Vergleich-Formmerkmal des mindestens einen reflektierenden Objekts (16a,16b,16c,18) hinterlegt sind.

6. Ultraschall-Messvorrichtung nach einem der vorhergehenden Ansprüche, wobei die Auswerteeinrichtung (112) dazu ausgelegt ist, unter Berücksichtigung einer Teilfolge der bestimmte Vergleichsinformation ($\Delta$pn(1) bis $\Delta$pn(N)) mindestens eine erste Relativgeschwindigkeit (va) und eine von der ersten Relativgeschwindigkeit (va) abweichende zweite Relativgeschwindigkeit (vb) des mindestens einen Objekts (16a,16b,16c,18) zu bestimmen, und wobei die Auswerteeinrichtung (112) zusätzlich dazu ausgelegt ist, bei einem Bestimmen der ersten Relativgeschwindigkeit (va) und der abweichenden zweiten Relativgeschwindigkeit (vb) zu erkennen, dass während eines der Teilfolge entsprechenden Zeitintervalls ($\Delta$5) ein an mindestens zwei verschiedenen Objekten (16a,16b) reflektiertes Ultraschallsignal (r(T)) von der Empfangseinrichtung (14) empfangen wird.

**7.** Verfahren zum Auswerten eines von einem fahrzeugeigenen Ultraschallsender (13) ausgesendeten und an mindestens einem in einem Übertragungsweg zwischen der Empfangseinrichtung (14) und dem fahrzeugeigenen Ultraschallsender (13) befindlichen reflektierenden Objekt (16a,16b,16c,18) reflektierten Ultraschallsignals (r(T)) mit den Schritten:

Bestimmen einer Messfolge (Δp, Δp(1), Δp(2),f,PN1 bis PN6,PP1 bis PP6) bezüglich eines Zeitverlaufs der Periodendauern (PN1 bis PN6, PP1 bis PP6) des empfangenen Ultraschallsignals (r(T)), wobei eine Folge von positiven Periodendauern (PP1 bis PP6) des empfangenen Ultraschallsignals (r(T)), eine Folge von negativen Periodendauern (PN1 bis PN6) des empfangenen Ultraschallsignals (r(T)), eine Folge von positiven Periodendauer-Abweichungen (Δp, Δp(1), Δp(2)) des empfangenen Ultraschallsignals (r(T)) von einer positiven Bezugsperiodendauer (P0) und/oder eine Folge von negative Periodendauer-Abweichungen des empfangenen Ultraschallsignals (r(T)) von einer negativen Bezugsperiodendauer (P0) bestimmt werden; wobei unter einer positiven Periodendauer (PP1 - PP6) ein zeitlicher Abstand zwischen zwei aufeinander folgenden Durchgängen von einem kleineren Wert zu einem größeren Wert des empfangenen Ultraschallsignals (r(τ)) bezogen auf einen Bezugswert (SB) und unter einer negativen Periodendauer (PN1 - PN6) der zeitliche Abstand zwischen zwei aufeinander folgenden Durchgängen von einem größeren Wert zu einem kleineren Wert des empfangenen Ultraschallsignals (r(τ)) bezogen auf den Bezugswert (SB) zu verstehen ist;
Vergleichen der bestimmten Messfolge (Δp, Δp(1), Δp(2),f,PN1 bis PN6,PP1 bis PP6) mit einer Folge von positiven Periodendauern (PP1 bis PP6) des ausgesendeten Ultraschallsignals (r(T)), einer Folge von negativen Periodendauern (PN1 bis PN6) des ausgesendeten Ultraschallsignals (r(T)), einer Folge von positiven Periodendauer-Abweichungen (Δp, Δp(1), Δp(2)) des ausgesendeten Ultraschallsignals (r(T)) von einer positiven Bezugsperiodendauer (P0) und/oder einer Folge von negative Periodendauer-Abweichungen des ausgesendeten Ultraschallsignals (r(T)) von einer negativen Bezugsperiodendauer (P0) als mindestens einer Referenzfolge (Δp0(1) bis Δp0(N)), wobei eine Vergleichsinformation (Δpn(1) bis Δpn(N)) bezüglich einer Abweichung der Messfolge (Δp, Δp(1), Δp(2),f,PN1 bis PN6,PP1 bis PP6) von der mindestens einen Referenzfolge (Δp0(1) bis Δp0(N)) bestimmt wird; wobei unter einer positiven Periodendauer (PP1 - PP6) ein zeitlicher Abstand zwischen zwei aufeinander folgenden Durchgängen von einem kleineren Wert zu einem größeren Wert des ausgesendeten Ultraschallsignals (s(τ)) bezogen auf einen Bezugswert (SB) und unter einer negativen Periodendauer (PN1 - PN6) der zeitliche Abstand zwischen zwei aufeinander folgenden Durchgängen von einem größeren Wert zu einem kleineren Wert des ausgesendeten Ultraschallsignals (s(τ)) bezogen auf den Bezugswert (SB) zu verstehen ist; und
Bestimmen einer Information bezüglich einer Relativgeschwindigkeit des mindestens einen reflektierenden Objekts (16a,16b,16c,18) und/oder eines Formmerkmals des mindestens einen reflektierenden Objekts (16a,16b,16c,18) unter Berücksichtigung der bestimmten Vergleichsinformation (Δpn(1) bis Δpn(N)), wobei durch eine zeitparallele Auswertung von positiven Periodendauern (PP1 bis PP6) und negativen Periodendauern (PN1 bis PN6) und/oder eine zeitparallele Auswertung von positiven Periodendauer-Abweichungen (Δp, Δp(1), Δp(2)) und negative Periodendauer-Abweichungen redundante Auswerteergebnisse zur gegenseitigen Plausibilisierung der Information bestimmt werden.

**8.** Verfahren nach Anspruch 7, wobei, sofern unter Berücksichtigung einer Teilfolge der bestimmten Vergleichsinformation (Δpn(1) bis Δpn(N)) mindestens eine erste Relativgeschwindigkeit (va) und eine von der ersten Relativgeschwindigkeit (va) abweichende zweite Relativgeschwindigkeit (vb) des mindestens einen Objekts (16a,16b,16c,18) bestimmt wird, bestimmt wird, dass während eines der Teilfolge entsprechenden Zeitintervalls (Δ5) ein an mindestens zwei verschiedenen externen Objekten (16a,16b) reflektiertes Ultraschallsignal (r(T)) empfangen wird.

**Claims**

**1.** Ultrasonic measurement apparatus for a vehicle (10), comprising

a receiver device (14) which is configured to receive an ultrasonic signal (r(τ)) that was emitted by a vehicle-own ultrasonic transmitter (13) and reflected at at least one reflecting object (16a, 16b, 16c, 18) situated in a transmission path between the receiver device (14) and the vehicle-own ultrasonic transmitter (13) and which is configured to determine and provide a measurement sequence (Δp, Δp(1), Δp(2), f, PN1 to PN6, PP1 to PP6) in respect of a time curve of the period durations (PN1 to PN6, PP1 to PP6) of the received ultrasonic signal (r(τ)), wherein the measurement sequence (Δp, Δp(1), Δp(2), f, PN1 to PN6, PP1 to PP6) determined by the receiver device (14) comprises a sequence of positive period durations (PP1 to PP6) of the received ultrasonic signal ($r(\tau)$), a sequence of negative period durations (PN1 to PN6) of the received ultrasonic signal ($r(\tau)$), a sequence of positive period duration deviations ($\Delta p$, $\Delta p(1)$, $\Delta p(2)$) of the received ultrasonic signal ($r(\tau)$) from a positive reference period duration (P0) and/or a sequence of negative period duration deviations of the received ultrasonic signal ($r(\tau)$) from a negative reference period duration (P0); wherein a positive period duration (PP1-PP6) should be understood to mean a temporal distance between two successive transitions from a smaller value to a larger value of the received ultrasonic signal ($r(\tau)$) in relation to a reference value (SB) and a negative period duration (PN1-PN6) should be understood to mean the temporal distance between two successive transitions from a larger value to a smaller value of the received ultrasonic signal ($r(\tau)$) in relation to the reference value (SB);

a comparison device (101), on which a sequence of positive period durations (PP1 to PP6) of the emitted ultrasonic signal ($r(\tau)$), a sequence of negative period durations (PN1 to PN6) of the emitted ultrasonic signal ($r(\tau)$), a sequence of positive period duration deviations ($\Delta p$, $\Delta p(1)$, $\Delta p(2)$) of the emitted ultrasonic signal ($r(\tau)$) from a positive reference period duration (P0) and/or a sequence of negative period duration deviations of the emitted ultrasonic signal ($r(\tau)$) from a negative reference period duration (P0) is stored as at least one reference sequence ($\Delta p0(1)$ to $\Delta p0(N)$), and which is configured to compare the determined measurement sequence ($\Delta p$, $\Delta p(1)$, $\Delta p(2)$, f, PN1 to PN6, PP1 to PP6) with the at least one reference sequence ($\Delta p0(1)$ to $\Delta p0(N)$) and to determine a comparison information item ($\Delta pn(1)$ to $\Delta pn(N)$) in respect of a deviation of the determined measurement sequence ($\Delta p$, Lp(1), $\Delta p(2)$, f, PN1 to PN6, PP1 to PP6) from the at least one reference sequence ($\Delta p0(1)$ to $\Delta p0(N)$); wherein a positive period duration (PP1-PP6) should be understood to mean the temporal distance between two successive transitions from a smaller value to a larger value of the emitted ultrasonic signal ($s(\tau)$) in relation to a reference value (SB) and a negative period duration (PN1-PN6) should be understood to mean a temporal distance between two successive transitions from a larger value to a smaller value of the emitted ultrasonic signal ($s(\tau)$) in relation to the reference value (SB); and

an evaluation device (112) which is designed to determine an information item in respect of a relative speed of the at least one reflecting object (16a, 16b, 16c, 18) and/or a shape feature of the at least one reflecting object (16a, 16b, 16c, 18) taking account of the determined comparison information item ($\Delta pn(1)$ to $\Delta pn(N)$), wherein redundant evaluation results for mutual plausibility checks in relation to the information item are determined by way of parallel evaluation in time of positive period durations (PP1 to PP6) and negative period durations (PN1 to PN6) and/or parallel evaluation in time of positive period duration deviations ($\Delta p$, $\Delta p(1)$, $\Delta p(2)$) and negative period duration deviations.

2. Ultrasonic measurement apparatus according to Claim 1, wherein the receiver device (14) comprises a threshold switcher (60) with a predetermined significance threshold ($R(\tau)$) which is designed to filter the ultrasonic signal ($r(\tau)$) in such a way that the measurement sequence ($\Delta p$, $\Delta p(1)$, $\Delta p(2)$, f, PN1 to PN6, PP1 to PP6) is determined taking account of signal regions ($\Delta 1$ to $\Delta 6$) of the ultrasonic signal ($r(\tau)$) with an intensity ($I(\tau)$) above the significance threshold ($R(\tau)$), and signal regions of the ultrasonic signal ($r(\tau)$) with an intensity ($I(\tau)$) below the significance threshold ($T(\tau)$) are filtered out.

3. Ultrasonic measurement apparatus according to Claim 1 or 2, wherein the receiver device (14) comprises a binary signal output device which is designed to convert at least regions of the received ultrasonic signal ($r(\tau)$) into a binary signal ($b(\tau)$, $b1(\tau)$, $b2(\tau)$) and wherein the receiver device (14) comprises at least one time measuring unit (62a, 62b, 154a, 154b) which is designed to determine the sequence of positive period duration deviations ($\Delta p$, $\Delta p(1)$, $\Delta p(2)$) and/or the sequence of negative period duration deviations from the reference period duration (P0) as a measurement sequence ($\Delta p$, $\Delta p(1)$, $\Delta p(2)$, f, PN1 to PN6, PP1 to PP6), taking account of the provided binary signal ($b(\tau)$, $b1(\tau)$, $b2(\tau)$).

4. Ultrasonic measurement apparatus according to Claim 3, wherein the receiver device (14) comprises a first time measuring unit (62a, 154a) and a second time measuring unit (62b, 154b) and wherein the first time measuring unit (62a, 154a) is designed to establish the positive period duration deviation ($\Delta p$, $\Delta p(1)$, $\Delta p(2)$) from the reference period duration (P0) and the second time measuring unit (62b, 154b) is designed to establish the negative period duration deviation from the reference period duration (P0).

5. Ultrasonic measurement apparatus according to any one of the preceding claims, wherein at least one first reference sequence in respect of a first comparison shape feature of the at least one reflecting object (16a, 16b, 16c, 18) and a second reference sequence in respect of a second comparison shape the feature of the at least one reflecting object (16a, 16b, 16c, 18) are stored on the comparison device (60).

6. Ultrasonic measurement apparatus according to any one of the preceding claims, wherein the evaluation device (112) is designed to determine at least one first relative speed (va) and one second relative speed (vb), deviating from the first relative speed (va), of the at least one object (16a, 16b, 16c, 18), taking account of a subsequence of the determined comparison information item (Δpn(1) to Δpn(N)), and wherein the evaluation device (112) is additionally designed, when determining the first relative speed (va) and the deviating second relative speed (vb), to identify that an ultrasonic signal (r(τ)) that is reflected at at least two different objects (16a, 16b) is received by the receiver device (14) during a time interval (Δ5) corresponding to the subsequence.

7. Method for evaluating an ultrasonic signal (r(τ)) that was emitted by a vehicle-own ultrasonic transmitter (13) and reflected at at least one reflecting object (16a, 16b, 16c, 18) situated in a transmission path between the receiver device (14) and the vehicle-own ultrasonic transmitter (13), including the steps of:

determining a measurement sequence (Δp, Δp(1), Δp(2), f, PN1 to PN6, PP1 to PP6) in respect of a time curve of the period durations (PN1 to PN6, PP1 to PP6) of the received ultrasonic signal (r(τ)), wherein a sequence of positive period durations (PP1 to PP6) of the received ultrasonic signal (r(τ)), a sequence of negative period durations (PN1 to PN6) of the received ultrasonic signal (r(τ)), a sequence of positive period duration deviations (Δp, Δp(1), Δp(2)) of the received ultrasonic signal (r(τ)) from a positive reference period duration (P0) and/or a sequence of negative period duration deviations of the received ultrasonic signal (r(τ)) from a negative reference period duration (P0) are determined; wherein a positive period duration (PP1-PP6) should be understood to mean a temporal distance between two successive transitions from a smaller value to a larger value of the received ultrasonic signal (r(τ)) in relation to a reference value (SB) and a negative period duration (PN1-PN6) should be understood to mean the temporal distance between two successive transitions from a larger value to a smaller value of the received ultrasonic signal (r(τ)) in relation to the reference value (SB); comparing the determined measurement sequence (Δp, Δp(1), Δp(2), f, PN1 to PN6, PP1 to PP6) with a sequence of positive period durations (PP1 to PP6) of the emitted ultrasonic signal (r(τ)), a sequence of negative period durations (PN1 to PN6) of the emitted ultrasonic signal (r(τ)), a sequence of positive period duration deviations (Δp, Δp(1), Δp(2)) of the emitted ultrasonic signal (r(τ)) from a positive reference period duration (P0) and/or a sequence of negative period duration deviations of the emitted ultrasonic signal (r(τ)) from a negative reference period duration (P0) as at least one reference sequence (Δp0(1) to Δp0(N)), wherein a comparison information item (Δpn(1) to Δpn(N)) is determined in respect of a deviation of the measurement sequence (Δp, Δp(1), Δp(2), f, PN1 to PN6, PP1 to PP6) from the at least one reference sequence (Δp0(1) to Δp0(N)); wherein a positive period duration (PP1-PP6) should be understood to mean a temporal distance between two successive transitions from a smaller value to a larger value of the emitted ultrasonic signal (s(τ)) in relation to a reference value (SB) and a negative period duration (PN1-PN6) should be understood to mean the temporal distance between two successive transitions from a larger value to a smaller value of the emitted ultrasonic signal (s(τ)) in relation to the reference value (SB); and

determining an information item in respect of a relative speed of the at least one reflecting object (16a, 16b, 16c, 18) and/or a shape feature of the at least one reflecting object (16a, 16b, 16c, 18) taking account of the determined comparison information item (Δpn(1) to Δpn(N)), wherein redundant evaluation results for mutual plausibility checks in relation to the information item are determined by way of parallel evaluation in time of positive period durations (PP1 to PP6) and negative period durations (PN1 to PN6) and/or parallel evaluation in time of positive period duration deviations (Δp, Δp(1), Δp(2)) and negative period duration deviations.

8. Method according to Claim 7, wherein, provided at least one first relative speed (va) and one second relative speed (vb), deviating from the first relative speed (va), of the at least one object (16a, 16b, 16c, 18) are determined taking account of a subsequence of the determined comparison information item (Δpn(1) to Δpn(N)), it is determined that an ultrasonic signal (r(τ)) that is reflected at at least two different external objects (16a, 16b) is received during a time interval (Δ5) corresponding to the subsequence.

## Revendications

1. Dispositif de mesure par ultrasons pour un véhicule (10), comportant
un moyen de réception (14) qui est conçu pour recevoir un signal ultrasonore (r(τ)) émis par un émetteur à ultrasons (13) propre au véhicule et réfléchi par au moins un objet réfléchissant (16a, 16b, 16c, 18) se trouvant sur un trajet de transmission entre le moyen de réception (14) et l'émetteur à ultrasons (13) propre au véhicule, et pour déterminer et délivrer une séquence de mesure (Δp, Δp(1), Δp(2), f, PN1 à PN6, PP1 à PP6) par rapport à une évolution temporelle des périodes de temps (PN1 à PN6, PP1 à PP6) du signal ultrasonore reçu (r(τ)), dans lequel la séquence de mesure (Δp, Δp(1), Δp(2), f, PN1 à PN6, PP1 à PP6) déterminée par le moyen de réception (14) comprend une séquence de périodes de temps positives (PP1 à PP6) du signal ultrasonore reçu (r(τ)), une séquence de périodes de temps négatives (PN1 à PN6) du signal ultrasonore reçu (r(τ)), une séquence d'écarts de périodes de temps positives (Δp, Δp(1), Δp(2)) du signal ultrasonore reçu (r(τ)) par rapport à une période de temps de référence positive (P0), et/ou une séquence d'écarts de périodes de temps négatives du signal ultrasonore reçu (r(τ)) par rapport à une période de temps de référence négative (P0) ; dans lequel on entend par période de temps positive (PP1-PP6) un intervalle de temps compris entre deux transitions consécutives d'une valeur faible à une valeur élevée du signal ultrasonore reçu (r(τ)) par rapport à une valeur de référence (SB) et on entend par période de temps négative (PN1-PN6) l'intervalle de temps compris entre deux transitions consécutives d'une valeur élevée à une valeur faible du signal ultrasonore reçu (r(τ)) par rapport à la valeur de référence (SB) ; un moyen de comparaison (101) auquel est appliquée une séquence de périodes de temps positives (PP1 à PP6) du signal ultrasonore émis (r(τ)), une séquence de périodes de temps négatives (PN1 à PN6) du signal ultrasonore émis (r(τ)), une séquence d'écarts de périodes de temps positives (Δp, Δp(1), Δp(2)) du signal ultrasonore reçu (r(τ)) par rapport à une période de temps de référence positive (P0) et/ou une séquence d'écarts de périodes de temps négatives du signal ultrasonore émis (r(τ)) par rapport à une période de temps de référence négative (P0) en tant qu'au moins une séquence de référence (Δp0(1) à Δp0(N)), et qui est conçu pour comparer la séquence de mesure déterminée (Δp, Δp(1), Δp(2), f, PN1 à PN6, PP1 à PP6) à au moins une séquence de référence (Δp0(1) à Δp0(N)) et pour déterminer une information de comparaison (Δpn(1) à Δpn(N)) par rapport à un écart de la séquence de mesure déterminée (Δp, Δp(1), Δp(2), f, PN1 à PN6, PP1 à PP6) par rapport à ladite au moins une séquence de référence (Δp0(1) à Δp0(N)) ; dans lequel on entend par période de temps positive (PP1-PP6) un intervalle de temps compris entre deux transitions consécutives d'une valeur faible à une valeur élevée du signal ultrasonore émis (s(τ)) par rapport à une valeur de référence (SB) et on entend par période de temps négative (PN1-PN6) l'intervalle de temps compris entre deux transitions consécutives d'une valeur élevée à une valeur faible du signal ultrasonore émis (s(τ)) par rapport à la valeur de référence (SB) ; et un moyen d'évaluation (112) qui est conçu pour déterminer, en tenant compte de l'information de comparaison déterminée (Δpn(1) à Δpn(N)), une information concernant une vitesse relative dudit au moins un objet réfléchissant (16a, 16b, 16c, 18), et/ou une caractéristique de forme dudit au moins un objet réfléchissant (16a, 16b, 16c, 18), dans lequel des résultats d'évaluation redondants sont déterminés pour un contrôle de plausibilité mutuelle des informations par une évaluation parallèle dans le temps de périodes de temps positives (PP1 à PP6) et de périodes de temps négatives (PN1 à PN6) et/ou par une évaluation parallèle dans le temps d'écarts de périodes de temps positives (Δp, Δp(1), Δp(2)) et d'écarts de périodes de temps négatives.

2. Dispositif de mesure par ultrasons selon la revendication 1, dans lequel le moyen de réception (14) comprend un commutateur de valeur de seuil (60) ayant un seuil de signification (R(τ)) prédéterminé, qui est conçu pour filtrer le signal ultrasonore (r(τ)) de manière à ce que la séquence de mesure (Δp, Δp(1), Δp(2), f, PN1 à PN6, PP1 à PP6) soit déterminée en tenant compte de plages de signal (Δ1 à Δ6) du signal ultrasonore (r(τ)) ayant une intensité (I(τ)) supérieure au seuil de signification (R(τ)), et des plages de signal du signal ultrasonore (r(τ)) présentant une intensité (I(τ)) inférieure au seuil de signification (R(τ)) sont éliminées par filtrage.

3. Dispositif de mesure par ultrasons selon la revendication 1 ou 2, dans lequel le moyen de réception (14) comprend un moyen de fourniture de signal binaire qui est conçu pour convertir le signal ultrasonore reçu (r(τ)) en un signal binaire (b(τ), b1(τ), b2(τ)), et dans lequel le moyen de réception (14) comprend au moins une unité de mesure de temps (62a, 62b, 154a, 154b) qui est conçue pour déterminer, en tenant compte du signal binaire (b(τ), b1(τ), b2(τ)) fourni, la séquence d'écarts de périodes de temps positives (Δp, Δp(1), Δp(2)) et/ou la séquence d'écarts de périodes de temps négatives par rapport à la période de temps de référence (P0) en tant que séquence de mesure (Δp, Δp(1), Δp(2), f, PN1 à PN6, PP1 à PP6).

4. Dispositif de mesure par ultrasons selon la revendication 3, dans lequel le moyen de réception (14) comprend une première unité de mesure de temps (62a, 154a) et une seconde unité de mesure de temps (62b, 154b), et dans lequel la première unité de mesure de temps (62a, 154a) est conçue pour déterminer l'écart de période de temps positive (Δp, Δp(1), Δp(2)) par rapport à la période de temps de référence (P0) et la seconde unité de mesure de temps (62b, 154b) est conçue pour déterminer l'écart de période de temps négative par rapport à la période de temps de référence (P0).

5. Dispositif de mesure par ultrasons selon l'une quelconque des revendications précédentes, dans lequel au moins une première séquence de référence concernant une première caractéristique de forme de comparaison dudit au moins un objet réfléchissant (16a, 16b, 16c, 18) et une seconde séquence de référence concernant une seconde caractéristique de forme de comparaison dudit au moins un objet réfléchissant (16a, 16b, 16c, 18) sont appliquées au moyen de comparaison (60).

6. Dispositif de mesure par ultrasons selon l'une quelconque des revendications précédentes, dans lequel le moyen d'évaluation (112) est conçu pour déterminer, en tenant compte d'une séquence partielle de l'information de comparaison ($\Delta$pn(1) à $\Delta$pn(N)), au moins une première vitesse relative (va) et une seconde vitesse relative (vb), s'écartant de la première vitesse relative (va), dudit au moins un objet (16a, 16b, 16c, 18), et dans lequel le moyen d'évaluation (112) est en outre conçu pour déterminer, lors d'une détermination de la première vitesse relative (va) et de la seconde vitesse relative (vb) s'en écartant, que, pendant un intervalle de temps ($\Delta$5) correspondant à la séquence partielle, un signal ultrasonore (r($\tau$)) réfléchi par au moins deux objets (16a, 16b) différents est reçu par le moyen de réception (14).

7. Procédé pour évaluer un signal ultrasonore (r($\tau$)) émis par un émetteur à ultrasons (13) et réfléchi par au moins un objet réfléchissant (16a, 16b, 16c, 18) se trouvant sur un trajet de transmission entre le moyen de réception (14) et l'émetteur à ultrasons (13) propre au véhicule, comportant les étapes consistant à :

déterminer une séquence de mesure ($\Delta$p, $\Delta$p(1), $\Delta$p(2), f, PN1 à PN6, PP1 à PP6) par rapport à une évolution temporelle des périodes de temps (PN1 à PN6, PP1 à PP6) du signal ultrasonore reçu (r($\tau$)), dans lequel une séquence de périodes de temps positives (PP1 à PP6) du signal ultrasonore reçu (r($\tau$)), une séquence de périodes de temps négatives (PN1 à PN6) du signal ultrasonore reçu (r($\tau$)), une séquence d'écarts de périodes de temps positives ($\Delta$p, $\Delta$p(1), $\Delta$p(2)) du signal ultrasonore reçu (r($\tau$)) par rapport à une période de temps de référence positive (P0) et/ou une séquence d'écarts de périodes de temps négatives du signal ultrasonore reçu (r($\tau$)) par rapport à une période de temps de référence négative (P0) sont déterminées ; dans lequel on entend par période de temps positive (PP1-PP6) un intervalle de temps compris entre deux transitions consécutives d'une valeur faible à une valeur élevée du signal ultrasonore reçu (r($\tau$)) par rapport à une valeur de référence (SB) et on entend par période de temps négative (PN1-PN6) l'intervalle de temps compris entre deux transitions consécutives d'une valeur élevée à une valeur faible du signal ultrasonore reçu (r($\tau$)) par rapport à la valeur de référence (SB) ;

comparer la séquence de mesure déterminée ($\Delta$p, $\Delta$p(1), $\Delta$p(2), f, PN1 à PN6, PP1 à PP6) à une séquence de périodes de temps positives (PP1 à PP6) du signal ultrasonore émis (r($\tau$)), à une séquence de périodes de temps négatives (PN1 à PN6) du signal ultrasonore émis (r($\tau$)), à une séquence d'écarts de périodes de temps positives ($\Delta$p, $\Delta$p(1), $\Delta$p(2)) du signal ultrasonore émis (r($\tau$)) par rapport à une période de temps de référence positive (P0) et/ou à une séquence d'écarts de périodes de temps négatives du signal ultrasonore émis (r($\tau$)) par rapport à une période de temps de référence négative (P0) comme étant au moins une séquence de référence ($\Delta$p0(1) à $\Delta$p0(N)), dans lequel une information de comparaison ($\Delta$pn(1) à $\Delta$pn(N)) concernant un écart de la séquence de mesure ($\Delta$p, $\Delta$p(1), $\Delta$p(2), f, PN1 à PN6, PP1 à PP6) par rapport à ladite au moins une séquence de référence ($\Delta$p0(1) à $\Delta$p0(N)) est déterminée ; dans lequel on entend par période de temps positive (PP1-PP6) un intervalle de temps compris entre deux transitions consécutives d'une valeur faible à une valeur élevée du signal ultrasonore émis (s($\tau$)) par rapport à une valeur de référence (SB) et on entend par période de temps négative (PN1-PN6) l'intervalle de temps compris entre deux transitions consécutives d'une valeur élevée à une valeur faible du signal ultrasonore émis (s($\tau$)) par rapport à la valeur de référence (SB) ; et

déterminer une information concernant une vitesse relative dudit au moins un objet réfléchissant (16a, 16b, 16c, 18) et/ou une caractéristique de forme dudit au moins un objet réfléchissant (16a, 16b, 16c, 18) en tenant compte de l'information de comparaison déterminée ($\Delta$pn(1) à $\Delta$pn(N)), dans lequel des résultats d'évaluation redondants sont déterminés pour un contrôle de plausibilité mutuelle des informations par une évaluation parallèle dans le temps de périodes de temps positives (PP1 à PP6) et de périodes de temps négatives (PN1 à PN6) et/ou par une évaluation parallèle dans le temps d'écarts de périodes de temps positives ($\Delta$p, $\Delta$p(1), $\Delta$p(2)) et d'écarts de périodes de temps négatives.

8. Procédé selon la revendication 7, dans lequel, dans la mesure où au moins une première vitesse relative (va) et une seconde vitesse relative (vb) s'écartant de la première vitesse relative (va) dudit au moins un objet (16a, 16b, 16c, 18) est déterminée en tenant compte d'une séquence partielle de l'information de comparaison (Δpn(1) à Δpn(N)) déterminée, il est déterminé que, pendant un intervalle de temps (Δ5) correspondant à la séquence partielle, un signal ultrasonore (r(τ)) réfléchi par au moins deux objets externes (16a, 16b) différents est reçu.

## Fig. 1A

## Fig. 1B

## Fig. 1C

## Fig. 2A

Fig. 2B

Fig. 2C

EP 2 457 110 B1

**Fig. 3**

**Fig. 4**

Fig. 5

Fig. 6A

## Fig. 6B

Fig. 7A

Fig. 7B

Fig. 7C

## Fig. 8A

## Fig. 8B

# Fig. 9A

# Fig. 9B

## Fig. 10A

## Fig. 10B

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3813083 A1
- EP 0898176 A